Europäisches Patentamt

European Patent Office

Office européen des brevets

(19)

(11) **EP 0 668 570 B1**

(12) **FASCICULE DE BREVET EUROPEEN**

(45) Date de publication et mention
de la délivrance du brevet:
**26.09.2001 Bulletin 2001/39**

(51) Int Cl.⁷: **G06T 5/00**

(21) Numéro de dépôt: **95200303.6**

(22) Date de dépôt: **08.02.1995**

(54) **Procédé de traitement d'images pour déterminer localement le centre et la demi-largeur d'objets contrastant sur un fond et arrangement pour mettre en oeuvre ce procédé**

Bildverarbeitungsverfahren zur örtlichen Bestimmung des Zentrums und der Objekte, die sich gegen einen Hintergrund abheben, und Vorrichtung zur Durchführung des Verfahrens

Image processing method for locally determining the center and half-length of contrasting objects on a background and apparatus to carry out the method

(84) Etats contractants désignés:
**DE FR GB NL**

(30) Priorité: **16.02.1994 FR 9401770**

(43) Date de publication de la demande:
**23.08.1995 Bulletin 1995/34**

(73) Titulaire: **Koninklijke Philips Electronics N.V.
5621 BA Eindhoven (NL)**

(72) Inventeur: **Florent, Raoul
F-75008 Paris (FR)**

(74) Mandataire: **Lottin, Claudine et al
Société Civile S.P.I.D.
156, Boulevard Haussmann
75008 Paris (FR)**

(56) Documents cités:
**FR-A- 2 623 642        US-A- 4 101 961**

- **PROC. TENCON '93. 1993 IEEE REGION 10 INTERNATIONAL CONFERENCE ON COMPUTERS, COMMUNICATIONS AND AUTOMATION, vol.2, 19 Octobre 1993, BEIJING,CHINA pages 978 - 982 YUNG-NIEN SUN ET AL. 'The Computer Image Analysis for the 2-D Coronary Arteriograms.'**
- **IEEE TRANSACTIONS ON ACCOUSTIC, SPEECH AND IMAGE PROCESSING, vol.36, no.9, Septembre 1988, USA pages 1501 - 1513 PAPPAS T N ET LIM J S 'A New Method for Estimation of Coronary Artery Dimensions in Angiograms'**

**Description**

L'invention concerne un procédé de traitement d'une image, laquelle comporte la représentation d'au moins un objet constitué de pixels d'intensité sensiblement uniforme, contrastant sur un fond constitué de pixels d'intensité sensiblement uniforme. L'invention concerne également un arrangement pour mettre en oeuvre ce procédé.

L'invention trouve son application dans la détermination des contours de tout objet, représenté dans une image, qui montre un contraste vis-à-vis d'un fond sensiblement uniforme. L'invention trouve par exemple son application dans le domaine des systèmes de formation d'images numérisées, pour aider à la détection d'anomalies telles que des sténoses à partir d'angiographies du corps humain ou animal.

Les angiographies sont des images spécialisées, pour la visualisation des vaisseaux sanguins. Plusieurs types d'angiographies sont réalisables : les angiographies coronariennes, pour la visualisation des artères irriguant le muscle du coeur, ou myocarde, l'ensemble de ces artères formant l'arbre coronarien ; les angiographies périphériques pour visualiser l'irrigation des membres inférieurs et supérieurs ; les angiographies cérébrales. On s'intéressera ci-après à titre d'exemple aux angiographies coronariennes. Les sténoses sont des rétrécissements locaux provoqués par des obstructions partielles ou totales qui apparaissent sur des artères. Dans le cas de l'arbre coronarien, les sténoses compromettent gravement l'irrigation du myocarde et doivent être détectées par un praticien à partir des angiographies.

L'introduction, ces dernières années, de la radiographie numérisée, qui combine l'utilisation d'un détecteur de rayons X donnant une image en temps réel et la numérisation des images, a constitué un progrès majeur dans le domaine de la formation d'images, par rapport à la radiographie conventionnelle. Elle donne en effet accès aux nombreuses possibilités offertes par les techniques de traitement numérique d'images. D'autres méthodes de formation d'images angiographiques sont également connues, telles que les méthodes utilisant la résonance magnétique nucléaire. Dans tous les cas, l'invention ne tient pas compte de la méthode par laquelle l'image numérique a été obtenue, ni de la nature des objets qu'elle représente, mais concerne seulement le traitement de cette image numérique pour déterminer les points centraux et les points des bords des objets représentés, pourvu que ces objets constituent des masses suffisamment uniformes contrastant sur un fond suffisamment uniforme.

Un procédé d'identification automatisé des contours de vaisseaux dans des angiographies coronariennes est connu de la publication intitulée "Automated Identification of Vessel Contours in Coronary Arteriograms by an adaptive Tracking Algorithm", par Ying SUN, dans IEEE Transactions on Medical Imaging, Vol.8, N°1, March 1989. Ce document décrit un algorithme de "suivi du tracé" dit "tracking" de la ligne centrale des vaisseaux, pour l'identification des contours de ces vaisseaux dans des angiographies numérisées. L'algorithme comprend essentiellement trois étapes qui sont :

1°) L'identification des points situés sur la ligne centrale d'un vaisseau. Chaque point de la ligne centrale a trois attributs : sa position, la direction d'un vecteur parallèle à la direction du tronçon de vaisseau auquel appartient le point, la demi largeur du vaisseau en ce point. Une fois donné un point $P_k$ de départ sur la ligne centrale du vaisseau, l'algorithme calcule un point $\tilde{P}_{k+d}$ à une distance donnée d dans la direction du vecteur attribut du point de départ $P_k$. Ensuite un filtrage convolutif est effectué au moyen d'un filtre rectangulaire d'orientation principale perpendiculaire audit vecteur, c'est-à-dire parallèle à la direction de balayage au point de départ $P_k$.

Ce filtrage permet d'identifier un point $P'_{k+d}$, déterminé en effectuant la convolution entre le profil de densité réel le long de la ligne de balayage passant par le point $\tilde{P}_{k+d}$, et un profil de densité idéal de forme rectangulaire. Le résultat de la convolution fournit un vecteur dont on cherche la valeur maximale, laquelle est relative à un pixel qui correspond au maximum du profil de l'intensité et permet la mise à jour du nouveau point $P'_{k+d}$.

2°) L'identification des bords du vaisseau : les bords du vaisseau correspondant au nouveau point $P'_{k+d}$ sont identifiés comme la position des points d'inflexion sur un profil de l'intensité transversal, c'est-à-dire perpendiculairement à un vecteur attribut du point $P'_{k+d}$ résultant d'une mise à jour. La demi-largeur du vaisseau est alors aussi mise à jour, puis le nouveau point $P_{k+d}$ de la ligne de centre recherché est enfin identifié.

Le procédé est répété pour tous les points situés sur des lignes de balayage perpendiculaires au premier vecteur attribut du point de départ $P_k$, de k+1 à k+d. Ce vecteur de direction est maintenu le même sur toute la distance d. La direction de balayage change chaque fois que le vecteur direction change. Dans le cas d'une bifurcation, le procédé choisit la branche de vaisseau qui a l'intensité la plus grande, de sorte que le profil d'intensité mis à jour ne montre plus de double pic.

3°) Moyennage spatial : ce procédé de "suivi de tracé" ou "tracking" génère une description du vaisseau en N entrées. Chaque entrée est caractérisée par un triplet = position d'un point sur la ligne de centre du vaisseau ; direction d'un vecteur parallèle à la ligne de centre dans un tronçon de longueur d choisie en fonction de la courbure du vaisseau ; demi largeur du vaisseau en ce point.

Un premier problème technique qui se pose dans le traitement d'image des angiographies est la détection de toutes les situations pathologiques, et l'élimination des fausses alarmes. Les situations pathologiques, contrairement à ce qui est indiqué dans le document cité, ne comprennent pas uniquement les sténoses qui apparaissent sous la forme d'un rétrécissement local dans un vaisseau, lequel montre donc simplement un minimum local de largeur. Les situations pathologiques comprennent aussi un type de rétrécissement dit "en marche d'escalier" qui apparaît sur un vaisseau d'une première largeur sensiblement uniforme, par le passage abrupt à une seconde largeur inférieure à la première. Ce genre de "marche d'escalier" peut signifier que l'on a affaire à un vaisseau dit principal, d'une première largeur, qui se divisait en deux vaisseaux dont l'un, de la seconde largeur, est toujours visible dans le prolongement du vaisseau principal, mais dont l'autre est maintenant complètement occlus à partir de son embranchement avec le vaisseau principal et a désormais disparu, étant devenu complètement invisible sur l'angiographie. L'unique moyen de détecter ce vaisseau complètement occlus et désormais invisible, est de détecter le rétrécissement en "marche d'escalier" sur le vaisseau principal.

Cette dernière situation pathologique ne peut pas être reconnue par l'algorithme décrit dans l'état de la technique cité ; ceci parce que le "suivi du tracé" ou "tracking" du vaisseau est prévu pour suivre le tracé du vaisseau principal et éliminer celui de vaisseaux secondaires. Ainsi, le procédé connu est incapable de distinguer le cas où il apparaît une "marche d'escalier" dû au fait qu'à l'embranchement l'un des deux vaisseaux secondaires a complètement disparu qui est un cas pathologique grave, du cas non pathologique où les deux vaisseaux secondaires sont toujours présents à l'embranchement. Comme la forme caractéristique en "marche d'escalier" est l'unique alarme permettant au praticien de déceler les vaisseaux occlus, ce type d'algorithme n'offre pas au praticien la possibilité de détecter ces situations pathologiques qui sont à la fois importantes en nombre et en gravité regardant l'état du patient.

Un second problème technique qui se pose est la réalisation d'appareils de radiologie munis de moyens pour la détection totalement automatique des situations pathologiques décrites plus haut, à savoir la première situation de rétrécissement local de vaisseaux, et la seconde situation de rétrécissement en "marche d'escalier". Par détection totalement automatique, on entend que la mise en évidence des situations pathologiques doit être réalisée sans l'aide d'un opérateur.

La réalisation d'angiographies suppose qu'un patient, en général éveillé, se voit injecter, par exemple par l'artère fémorale au moyen d'un cathéter, un produit contrastant ; puis un opérateur réalise une série de radiographies de l'arbre coronarien sous la forme d'une séquence d'images vidéo à raison de 30 images par seconde, par exemple. Une telle séquence permet ainsi de visualiser plusieurs cycles cardiaques. Les sténoses ou rétrécissements décrits plus haut sont les principales anormalités à détecter. Mais cette détection peut être rendue difficile en raison d'une orientation peu favorable des vaisseaux, ou du passage d'un vaisseau à l'arrière plan derrière un vaisseau situé en premier plan. Il est donc nécessaire d'exploiter différents angles de projection et aussi de tenter de détecter les sténoses dans toutes les images de la séquence vidéo pour lesquelles la concentration du produit contrastant est suffisamment forte pour assurer une bonne visibilité des vaisseaux.

Les clichés sont donc assez nombreux, et le praticien établit son diagnostic en faisant défiler ces images lentement devant ses yeux. Il apparaît alors un besoin pour mettre en évidence à l'avance et de manière automatique les situations pathologiques dont on a parlé plus haut. En effet, le praticien a tendance, psychologiquement, à voir son attention attirée par les situations pathologiques les plus flagrantes, et à laisser passer certaines situations moins visibles, mais qui peuvent être plus gênantes, ou plus graves, cliniquement, pour l'avenir du patient. Ou bien le praticien peut laisser passer certaines situations pathologiques parce qu'elles n'apparaissent que dans une seule image, ou dans peu d'images de la séquence.

Il est donc important que le praticien puisse disposer d'un système de mise en évidence des situations pathologiques de manière à attirer son attention sur les endroits des images, ou les endroits de l'unique ou des quelques images de la séquence qui contiennent en fait les informations les plus intéressantes, qu'il est indispensable d'examiner. Son attention pourra ainsi être attirée sur les endroits les moins vraisemblables a priori, mais qui contiennent néanmoins des situations pathologiques ; et par ailleurs, son attention pourra être détournée de se focaliser sur quelques sténoses évidentes mais sans grande importance sur le plan des suites médicales.

Une telle automatisation totale de la détection des situations pathologiques ne peut être mise en oeuvre que si l'on réussit préalablement à rendre automatique la détection de la position des objets dans l'image numérique, par exemple par la détermination de la position de leurs points de centres, et si l'on réussit en outre, préalablement, à rendre automatique la détection de la position de leurs bords, ou de leurs contours, par exemple par la détermination de leur demi largeur dans une direction donnée, à partir du point de centre correspondant.

Une telle automatisation de la détermination des lignes de centres et des lignes de contours conduit à pouvoir ultérieurement rendre automatique la détection de toute anomalie portant sur les dimensions ou la forme des objets dans l'image numérique.

Une telle automatisation totale de la détection des situations pathologiques ne peut être obtenue si l'on utilise l'algorithme connu du document cité.

Cet algorithme connu du document cité n'est pas assez robuste pour permettre une automatisation ultérieure totale du procédé de détection de sténoses. Le manque de robustesse est dû au fait que l'algorithme détermine les points de la ligne de centre de vaisseau par des approximations successives à partir d'un point de départ, et parce qu'il utilise des profils de densité d'images bruitées. Des erreurs peuvent ainsi s'accumuler, ce qui est un inconvénient lorsqu'un automatisme poussé est envisagé. De ce fait, ou bien cet algorithme peut conduire à suivre des chemins qui ne sont pas des vaisseaux : il peut s'égarer. Ou bien il conduit à laisser de côté des chemins intéressants. Il faut alors le remettre sur le chemin que l'on veut réellement suivre. Il en résulte que, dû à ce manque de robustesse, il a besoin d'être guidé.

D'autre part, dans le cas où une bifurcation apparaît lors du suivi du tracé d'un vaisseau, l'algorithme connu est prévu pour suivre la branche qui montre l'intensité la plus grande, éliminant ainsi le suivi du tracé du vaisseau secondaire, car cet algorithme connu ne peut se permettre de traiter le problème qui apparaît lorsque le profil d'intensité montre un double pic. L'examen des vaisseaux secondaires doit donc se faire en repositionnant le "point de départ" de l'algorithme à l'endroit de l'embranchement, sur le vaisseau secondaire abandonné lors d'un premier passage, pour effectuer maintenant les étapes de l'algorithme en suivant ce vaisseau secondaire. Pour suivre l'ensemble des vaisseaux d'une région vitale considérée, l'algorithme connu a donc, pour cette raison supplémentaire, encore besoin d'être guidé, et n'est donc pas automatisable.

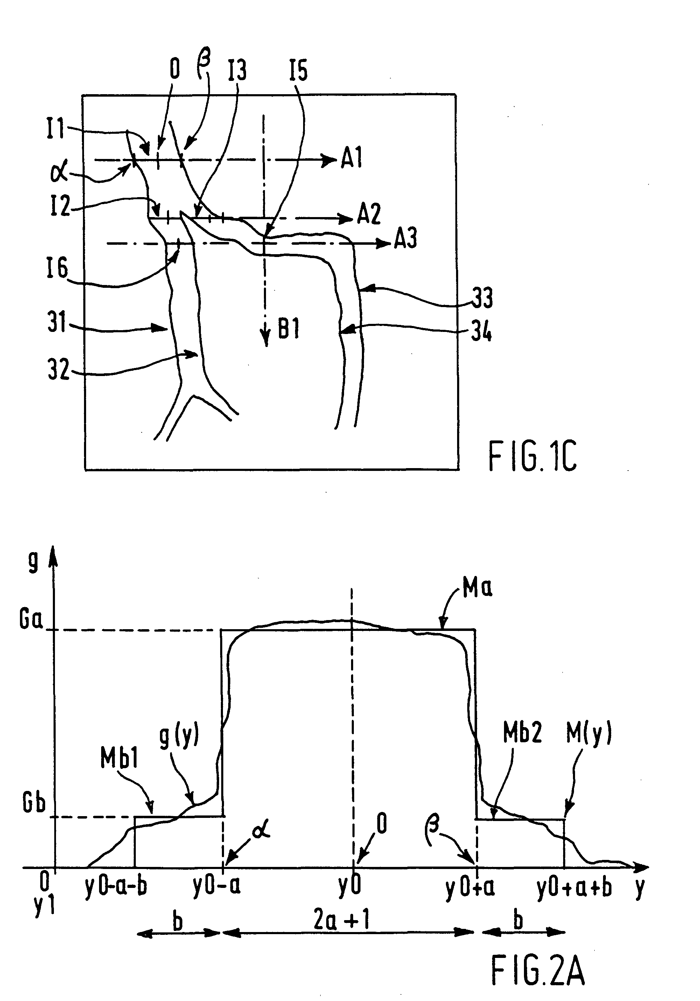

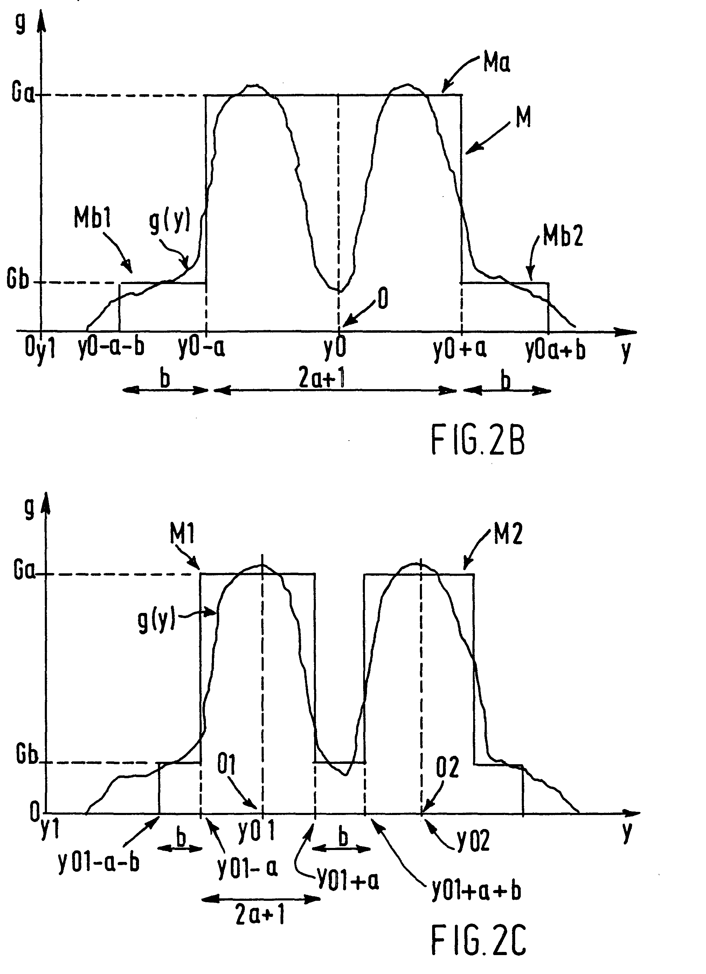

On notera que, en référence avec la FIG.2 du document cité, un profil d'intensité idéal, de forme rectangulaire, est utilisé pour réaliser une convolution avec le profil d'intensité obtenu par balayage transversal du vaisseau étudié, afin de déterminer un vecteur dont on cherche la valeur maximale, laquelle est relative au pixel correspondant au maximum du profil d'intensité mesuré. Ce pixel est retenu comme point de la ligne de centre mis à jour. Pour effectuer cette opération, la largeur du profil idéal rectangulaire est fixée A PRIORI. La largeur réelle du vaisseau n'est pas déterminable lors de cette étape de l'algorithme.

La détermination de la largeur des vaisseaux est réalisée dans une étape ultérieure, en identifiant les bords du vaisseau comme les points d'inflexion de part et d'autre du maximum du profil d'intensité transversal mesuré du vaisseau. Cette étape donne une mise à jour de la largeur locale du vaisseau qui sera utilisée pour déterminer la largeur du profil idéal rectangulaire utilisé dans la détermination du point de centre suivant lors d'une étape ultérieure.

La présente invention a pour but de fournir un procédé pour déterminer, dans une image comportant la représentation d'objets sensiblement uniformes contrastant sur un fond sensiblement uniforme, les points centraux ainsi que les demi largeurs locales de sections des objets par des droites de balayage de directions prédéterminées.

La présente invention a particulièrement pour but de déterminer ainsi les points de centre et les points des bords d'objets qui ne sont pas nécessairement les branches de vaisseaux sanguins mais qui peuvent être tout autre objet d'une image répondant aux conditions de contraste.

La présente invention a particulièrement pour but de fournir un tel procédé qui soit robuste, c'est-à-dire dont la détermination d'un point ne dépende pas de la détermination d'un point précédent suivie d'une approximation.

La présente invention a aussi pour but de fournir un tel procédé qui n'ait pas besoin d'être guidé, c'est-à-dire à qui l'on n'est pas besoin d'imposer des points de départ, ou à qui l'on n'a pas besoin d'imposer une zone de recherche particulière.

La présente invention a aussi pour but de fournir un procédé capable de travailler à toute résolution, et qui permette la détermination de la largeur d'un objet quelle que soit la largeur déterminée lors d'une étape antérieure.

La présente invention a encore pour but de fournir un tel procédé qui ne laisse pas de côté des objets de trop petites ou trop grandes dimensions ou des objets disposés les uns des autres à des très faibles distances et qui soit capable de mettre en évidence des discontinuités dans cette structure.

La présente invention a particulièrement pour but de fournir une telle méthode qui soit complètement automatisable.

Ces buts sont atteints au moyen d'un procédé selon la Revendication 1.

Une mise en oeuvre de ce procédé, pour la construction de ladite seconde fonction des sommes cumulées, est caractérisé par les éléments de la Revendication 2.

Ainsi le procédé selon l'invention est robuste. Les points et valeurs déterminés le sont d'une manière absolue, non par une approximation à partir d'une valeur ou d'un point précédent. Ceci est très différent de la méthode connue et constitue un avantage essentiel en vue de rendre le procédé automatique.

En outre, le procédé selon l'invention, n'a pas besoin d'être guidé, mais détermine systématiquement tous les points de bord d'un objet dès que cet objet est rencontré par une droite de balayage. Il est donc essentiellement automatisable. Il ne laisse aucun objet de côté, que ce soit pour des raisons de forme ou des raisons de dimension comme le faisait la méthode connue. Ceci est aussi une grande différence et un avantage essentiel vis-à-vis de la méthode connue.

De plus, le procédé selon l'invention permet de distinguer les bords de deux objets même très rapprochés, alors que la méthode connue, ou bien confondait les objets, ou bien laissait l'un d'eux de côté. Le procédé selon l'invention est donc très précis. Ceci est une grande différence et un autre avantage essentiel de l'invention.

Dans une mise en oeuvre particulière, ce procédé de traitement d'image est caractérisé par les éléments de la Revendication 3.

Dans une mise en oeuvre préférentielle, ce procédé est caractérisé en ce qu'il comprend les éléments de la Revendication 4.

Donc, selon l'invention, les points de centre et les demi-largeurs sont déterminés par un même processus qui inclut uniquement le calcul de sommes cumulées d'intensités de pixel, ou d'intensités au carré, sur une droite de balayage. Ces calculs sont rapides et faciles à mettre en oeuvre. Le procédé selon l'invention est donc là encore particulièrement avantageux. Chaque détermination de centre et de demi-largeur associée est effectuée pour une droite de balayage donnée, indépendamment de toute autre détermination antérieure ou ultérieure. Donc en prévoyant un nombre de droites de balayage adéquat, on obtient selon l'invention une détermination robuste et précise des points des lignes de centres et de bords. La prédétermination des directions des droites de balayage ne dépend de rien d'autre que du souci de couvrir correctement l'image pour déterminer un nombre de points suffisant. Ces directions peuvent être avantageusement les directions de balayage parallèles par lignes et colonnes connues de l'homme du métier. Mais toute autre direction de balayage est aussi possible.

L'invention propose en outre un arrangement pour procéder au traitement d'une image, laquelle comporte la représentation d'au moins un objet OBJ constitué de pixels d'intensité sensiblement uniforme, contrastant sur un fond constitué de pixels d'intensité sensiblement uniforme, cet arrangement comprenant les éléments de la Revendication 12.

En particulier, l'invention propose un arrangement tel que le précédent, comprenant en outre les éléments de la Revendication 13.

L'invention est décrite ci-après en détail en référence avec les figures schématiques annexées dont :

la FIG.1A représente un objet sombre sur un fond clair dans une image numérique ;
la FIG.1B représente les lignes formées des points de centres de l'objet de la FIG.1A;
la FIG.1C représente les lignes formées des points de bords de l'objet de la FIG.1A;
la FIG.2A représente, sur un même graphique, la courbe réelle g(y) d'intensité des pixels d'abscisse y le long d'une direction de balayage de l'image numérique, et le modèle M(y) utilisé pour déterminer le centre O et les bords $\alpha$, $\beta$ de l'objet ayant fourni la courbe réelle g(y) ;
la FIG.2B représente un graphique du même type concernant deux objets rapprochés dont l'image est traitée par la mise en oeuvre de la première méthode de l'invention ;
la FIG.2C représente un graphique du même type concernant deux objets rapprochés dont l'image est traitée par la mise en oeuvre de la seconde méthode ;
les FIG.3A, 3B, 3C, 3D illustrent les intervalles en pixels, respectivement Lt, Ma, Mb2 et Mb1, sur lesquels sont calculées les sommes cumulées $S_1^t$, $S_1^a$, $S_1^{b\,2}$, $S_1^{b1}$ en effectuant la différence entre les sommes cumulées des intensités simples ou au carré sur le domaine s'étendant du pixel 1 de la droite de balayage au dernier pixel de l'intervalle considéré, et les sommes cumulées de ces intensités sur le domaine s'étendant du pixel 1 de la droite de balayage au pixel avant le premier pixel de l'intervalle considéré ;
les FIG.4A et 4B qui illustrent les deux minimisations successives à appliquer à la fonction d'erreur E, dans le cas où l'on part de l'hypothèse que la demi largeur "a" des modèles varie dans un intervalle donné, et que la largeur externe "b" du modèle est constante, la première pour une position donnée d'un pixel courant en fonction de cette demi largeur "a" variant dans son intervalle ; la seconde sur l'ensemble des valeurs minimisées de E ainsi déterminées, et en fonction des positions correspondantes de tous les pixels courants ;
les FIG.5A et 5B, illustrent les deux maximisations successives à appliquer à la fonction simplifiée d'erreur V, dans le cas où l'on part de l'hypothèse que la largeur Lt totale du modèle M(y) est fixe, la première pour une position donnée d'un pixel courant, en fonction de la demi largeur "a" du modèle variant dans un intervalle donné ; la seconde sur l'ensemble des valeurs maximisées de E ainsi déterminées, et en fonction des positions correspondantes de tous les pixels courants ;
la FIG.6A illustre un diagramme schématique de blocs pour former un arrangement approprié à mettre en oeuvre le procédé ;
la FIG.6B représente schématiquement une image à traiter, et la FIG.6C représente schématiquement une image traitée selon une droite de balayage.

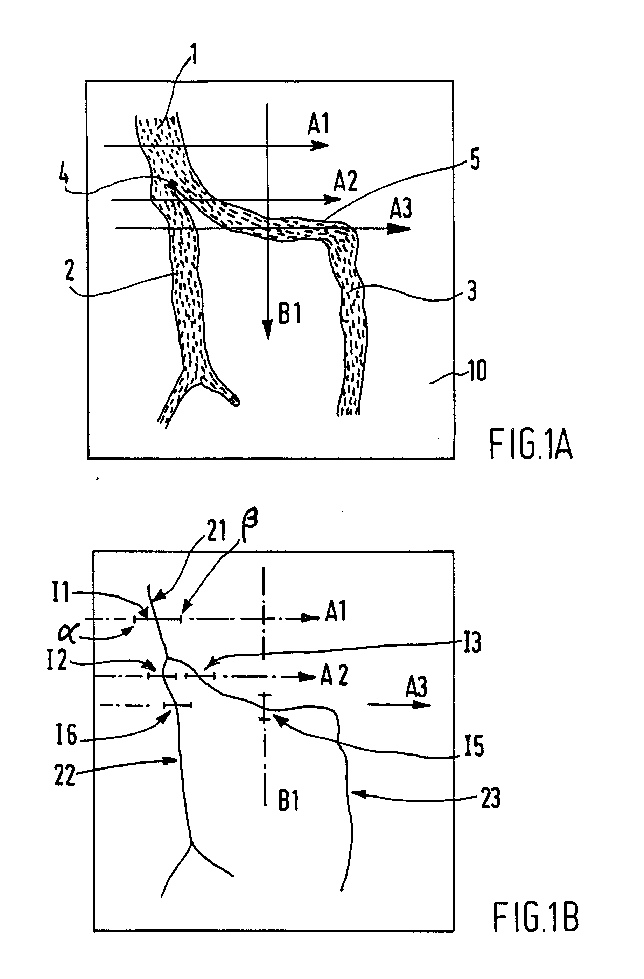

Dans un exemple décrit à titre non limitatif, la présente invention concerne une méthode pour déterminer, dans une image, numérique ou non numérique, telle que montrée sur la FIG.1A représentant une structure arborescente, la largeur de chaque branche de la structure par la détermination des points situés au centre de ces branches et des points localisés sur les bords de ces branches. La présente méthode peut être appliquée sans modification de ses moyens à la détermination de la position des points de centre et des points des bords de tout objet contrastant sur un fond uniforme dans une image numérique ou non numérique. D'une manière générale, la présente invention concerne un procédé de traitement d'une image, laquelle comporte la représentation d'au moins un objet constitué de pixels d'intensité sensiblement uniforme contrastant sur un fond constitué de pixels d'intensité sensiblement uniforme. Par "intensité sensiblement uniforme contrastant sur", on entend que les variations d'intensité sur la surface de l'objet sont d'un ordre de grandeur, c'est-à-dire environ 10 fois, ou au moins 10 fois, plus petites que la différence entre l'intensité moyenne des pixels de l'objet et l'intensité moyenne des pixels du fond environnant.

Une des particularités de l'invention est qu'elle concerne une méthode, ou algorithme, applicable au moyen d'un balayage systématique et automatique de l'image par des droites de directions prédéterminées. L'algorithme est mis en oeuvre par balayage selon cette série de droites parallèles à une direction donnée. Puis, éventuellement, par exemple dans le cas d'une image numérique, l'algorithme peut être mis en oeuvre par balayage selon une seconde, voire une troisième, etc.. séries de droites parallèles à une deuxième puis troisième direction donnée respectivement, de manière à mieux déterminer la largeur de toutes les branches de la structure ou de tous les objets pouvant avoir des orientations différentes dans le plan de l'image numérique.

Dans une mise en oeuvre simple appliquée à une image numérique, le balayage peut être effectué selon les lignes et/ou les colonnes de pixels de l'image numérique, mais non pas exclusivement. Toutes les directions de balayage sont possibles ; y compris des directions ne passant pas exclusivement par des pixels. Dans le cas d'une image numérique, il faut noter que les directions de balayage et le nombre de droites de balayage dans chaque direction est choisi complètement A PRIORI par l'homme du métier, avec comme seuls but et condition, la précision recherchée, c'est-à-dire la distance entre chaque ligne de balayage qui définit finalement le nombre de mesures fournies par le procédé.

En référence à la FIG.1A, on supposera dans ce qui suit que l'objet représenté, en l'occurrence ici, la structure arborescente à étudier, est d'intensité sensiblement uniforme, par exemple noire, sur un fond également sensiblement uniforme, par exemple blanc. Néanmoins, cette image présente plusieurs niveaux de luminance, et il en résulte que le profil d'intensité transversal d'une branche de la structure à étudier déterminé lors du balayage, n'est pas idéalement rectangulaire. Si le fond de l'image n'est pas suffisamment uniforme, l'homme du métier peut avoir recours à une étape préliminaire d'extraction du fond, telle que décrite à titre d'exemple non limitatif dans la demande de brevet européen N° EP-A-0 635 806. C'est pourquoi, dans la présente description, il n'est pas limitatif de parler de fond uniforme.

En référence à la FIG.1A, on a représenté une image numérique 10, comportant à titre d'objets : en 1 une première branche de la structure arborescente, par exemple représentant un vaisseau sanguin ; en 2 et 3 respectivement des deuxième et troisième branches issues de l'embranchement 4. Les lignes, respectivement A1, A2, A3,..., B1 etc.. représentent des droites de balayage parallèles dans une première direction A et dans une seconde direction B. Chacune des droites de balayage coupe les objets selon des segments I1, I2... etc. Par exemple la droite de balayage A1 coupe la branche 1 selon le segment I1 ; la droite de balayage A2 coupe les branches 2 et 5 selon les segments I2 et I3 ; la droite de balayage A3 coupe la branche 2 selon le segment I6 ; la droite de balayage B1 coupe la branche 5 selon le segment I5.

L'image 10 est numérique, c'est-à-dire formée de pixels dotés chacun d'un niveau de luminance ou d'intensité. Le niveau de luminance ou d'intensité peut être repéré par exemple sur une échelle de niveaux de luminance graduée de 1 à 256. Les pixels les plus lumineux ou clairs sont affectés des niveaux de luminance les plus grands, et les pixels les moins lumineux, ou pixel sombres, sont affectés des niveaux de luminance les plus petits sur cette échelle. Selon l'invention, on fournit un procédé de traitement de l'image numérique 10, applicable aussi à une image non numérique, pour déterminer les positions des points centraux O ainsi que les positions des points extrêmes $\alpha$, $\beta$ des segments I1, I2,... déterminés par la section des objets de l'image par des droites A1, A2, A3,... B1... parallèles aux directions données, dites ci-après d'une manière générale, direction $\Delta$. A cet effet, on cherche à calculer les demi largeurs des segments I1, I2..., ce qui permettra de déterminer les positions $\alpha$, $\beta$, des extrémités de ces segments, une fois connues les positions des points centraux de ces segments, sur chacune des droites de balayage.

En référence à la FIG.1B, on cherche donc à déterminer, à partir de la structure de la FIG.1A, les lignes de centre telles que :

 la ligne de centre 21 de la branche 1 de la FIG.1A,
 la ligne de centre 22 de la branche 2 de la FIG.1A,
 la ligne de centre 23 de la branche 3 de la FIG.1A.

En référence à la FIG.1C, on cherche aussi à déterminer les lignes de bords des branches, telles que :

 la ligne 31 bord de la branche 1 et de la branche 2 de la FIG.1A,
 la ligne 32 selon bord de la branche 2,
 la ligne 33 second bord de la branche 1 et bord de la branche 3,
 la ligne 34 second bord de la branche 3.

Lorsque ci-après on fera référence à un point calculé, au lieu d'un pixel, cela signifie qu'à ce point est associé un niveau de luminance déterminé par interpolation en fonction des niveaux de luminance des pixels choisis dans un voisinage autour de ce point ; par exemple un voisinage formé des 4 pixels les plus proches de ce point. On pourra également calculer la luminance d'un point, en choisissant un voisinage formé de pixels à diverses distances de ce point, en affectant la luminance de chacun de ces pixels d'un poids d'autant plus faible que ce pixel est éloigné du point considéré, et en affectant le point considéré d'une luminance obtenue en prenant en compte des luminances pondérées des pixels du voisinage.

Sur une droite de balayage $\Delta$ donnée on trouvera donc soit des pixels, soit des points, régulièrement répartis et dotés chacun d'un niveau de luminance. La position de chaque pixel ou point sera repérée sur la droite de balayage $\triangle$ par son abscisse "y" mesurée en nombre de pixels dans le sens du balayage à partir du pixel origine de la droite de balayage. Un point ou pixel courant Pi donné sur la droite $\triangle$ aura pour abscisse particulière "yi".

En référence à la FIG.2A, on a représenté le profil d'intensité réel transversal g(y) obtenu par balayage de l'image selon la droite A1 ; en référence aux FIG.2B et 2C, le profil d'intensité réel transversal g(y) obtenu par balayage de l'image selon la droite A2. Sur ces courbes, la valeur des intensités est représentée inversée pour la facilité du dessin. C'est-à-dire qu'un objet noir ayant donc un niveau de luminance faible, est représenté par une courbe d'intensité à valeurs positives. Une telle représentation résulte d'une pure convention sans incidence sur le procédé de l'invention.

L'algorithme décrit ci-après est destiné à déterminer l'existence d'une ou plusieurs branches, ou objets lors du balayage par chaque droite $\triangle$ ; le(s) centre(s) O local(aux) de la ou des branche(s) sur la droite $\Delta$ considérée ; la (les) demi- largeur(s) locales(s) "a" de la ou des branche(s) sur la droite $\Delta$ en question ; c'est-à-dire par exemple la position "yo" du centre O du segment I1 délimité par la section de la branche 1 par la droite de balayage A1, ainsi que la demi largeur "a" de ce segment I1 sur cette droite A1, conduisant à la détermination de la position des extrémités $\alpha$ et $\beta$ de ce segment I1 sur la droite de balayage A1. Cet algorithme est capable d'effectuer cette détermination quelle que soit la largeur respective de ces branches ou objets, c'est-à-dire branches larges de plusieurs dizaines de pixels, ou de seulement quelques pixels ; et quelle que soit la distance qui sépare les différentes branches ou objets les uns des autres, c'est-à-dire distance de plusieurs dizaines de pixels ou de seulement quelques pixels.

Selon l'une et l'autre des méthodes décrites ci-après, on cherche d'abord à déterminer un modèle binaire capable de coller au mieux au profil d'intensité réel transversal g(y) obtenu par le balayage selon une droite $\Delta$ choisie parmi toutes les droites de balayage $\Delta$ possibles de l'image numérique.

### I/ Analyse du problème technique

On cherche d'abord une fonction binaire M(y) formant un modèle idéal s'approchant au plus près du profil réel g(y) tel que représenté sur les FIG.2A, 2B, 2C à titre d'exemple. Cette fonction binaire serait donc la fonction représentant le profil d'intensité transversal idéal selon la droite de balayage $\Delta$, d'un objet totalement uniforme sur un fond totalement uniforme. On appelle ci-après "<u>chapeau</u>" ce modèle. Soit M(y) un chapeau choisi pour correspondre au profil g(y) de la FIG.2A.

Tel que représenté sur la FIG.2A, soit "yo" l'abscisse du milieu O de ce chapeau M(y) le long de la droite $\Delta$ et Lt sa largeur totale. Le chapeau a une largeur centrale
La = (2a+1) pixels, et deux bords de largeur Lb1 = Lb2 = b pixels chacun. La hauteur du chapeau au centre, c'est-à-dire l'intensité des pixels dans la partie centrale Ma du chapeau, est notée Ga, et la hauteur du chapeau de part et d'autre de la partie centrale, c'est-à-dire l'intensité des pixels dans ces parties dites externes Mb1 et Mb2, est notée Gb.

Dans la représentation idéale de la FIG.2A, le chapeau M(y) a son centre O en coïncidence avec celui de la section I1, donc avec celui du profil g(y) ; en outre le chapeau M(y) a les extrémités de sa partie centrale en coïncidence avec les extrémités $\alpha$, $\beta$ de cette section I1 ; par conséquent la demi largeur de l'objet 1 mesurée par la demi largeur de la section I1 sur la droite de balayage A1 de la FIG.1A est égale à la valeur de la demi largeur de la partie centrale Ma du chapeau. On a donc défini le modèle, ou chapeau de la FIG.2A, au moyen de 5 paramètres : yo, Ga, Gb, a et b.

On cherche avant tout une méthode de détermination du centre et de la demi-largeur des branches de la structure arborescente ou d'autres objets de la FIG.1A qui puisse être mise en oeuvre en temps réel, c'est-à-dire qui comporte des calculs relativement simples et faciles à mettre en oeuvre. On cherche donc une définition du modèle ou chapeau qui utilise un nombre aussi réduit que possible de paramètres. Pour déterminer les paramètres "yo" et "a" ainsi définis précédemment, on cherche à minimiser l'erreur quadratique entre le modèle de chapeau M(y) et la fonction réelle d'intensité g(y) des pixels le long de la droite de balayage $\Delta$. Cette erreur quadratique ou énergie d'erreur s'exprime par la formule du type :

$$E = \Sigma[M(y)-g(y)]^2 \qquad\qquad 1a)$$

Dans cette formule, "y" est l'abscisse, mesurée en pixels, du pixel courant P sur la droite de balayage $\Delta$. Si la droite de balayage $\Delta$ ne coïncide pas avec une ligne ou une colonne de pixels de l'image numérique, alors il faut définir sur la droite de balayage $\Delta$ des points régulièrement espacés dont on détermine l'intensité par interpolation par rapport à l'intensité des pixels considérés dans un voisinage donné. Cette méthode à été décrite plus haut et est déjà connue de l'état de la technique.

Sur la droite Δ on peut décider que le pixel courant parcourt la droite Δ, du pixel numéroté y1, au pixel numéroté yn ; par exemple on peut décider que le pixel courant parcourt toute la droite Δ du pixel numéroté 1 au dernier pixel. Dans un exemple, le dernier pixel peut être numéroté 500, ou 1000, selon l'étendue de l'image numérique et selon sa définition. Mais, que la droite Δ soit étalonnée en pixels ou en points, les numéros y1, y2, y3...yi...yn de ces pixels ou points appartiennent à l'ensemble N des nombres entiers positifs.

Donc, dans la formule 1a), la fonction g(y) est la fonction d'intensité réelle des pixels ou points sur la droite de balayage Δ, et la fonction M(y) est la fonction d'intensité du modèle. Cette fonction relative au modèle M(y) peut prendre seulement 2 valeurs qui sont :

M(y) = Ga si "y" appartient à la partie centrale Ma
et M(y) = Gb si "y" appartient à l'une ou l'autre des parties externes Mb1 ou Mb2,
M(y) = 0 en dehors de ces régions.

Dans une première analyse du procédé, on fixe le pixel courant Pi dans la position yo milieu du chapeau sur la droite Δ, et l'on considère que l'erreur quadratique E est minimale lorsque le chapeau M(y) est idéalement centré au point 0 milieu de l'objet dont on cherche le centre et les bords, donc lorsque tous les points milieux sont en 0 et ont pour abscisse yo. Le domaine couvert par la partie centrale Ma du chapeau M(y) se définit par :

$y \in Ma$ quand $y \in [yo-a, yo+a]$

D'autre part, le domaine couvert par l'une et l'autre des parties externes du chapeau, Mb1 et Mb2, se définit par :

$y \in (Mb1, Mb\,2)$ quand:

$$y \in [yo-(a+b), yo-(a+1)]\ U[yo+a+1, yo+a+b] \cap N$$

où N est l'ensemble des entiers naturels.

D'où il vient que l'erreur quadratique E s'exprime de façon plus particulière par :

$$E = \frac{1}{2(a+b)+1}\left\{\sum_{y \in Mb1, Mb\,2}[g(y)-Gb]^2 + \sum_{y \in Ma}[g(y)-Ga]^2\right\} \quad 1b)$$

Il en résulte que cette erreur est minimale lorsque les dérivées premières de l'expression E effectuée en Gb et en Ga sont nulles, ce qui conduit aux conditions :

$$\frac{\partial E}{\partial Gb} = 0 \quad d'où \quad \sum_{g(Mb)}[G(y)-Gb]=0$$

d'où il vient:

$$Gb = \frac{1}{2b}\sum_{y \in Mb}g(y) \quad 2a)$$

$$\frac{\partial E}{\partial Ga} = 0 \quad d'où \quad \sum_{y \in Ma}[G(y)-Ga]=0$$

d'où il vient:

$$Ga = \frac{1}{2a+1} \sum_{y \in Ma} g(y) \quad 2b)$$

Cette formulation permet donc de déterminer immédiatement 2 des 5 paramètres annoncés précédemment : ces deux paramètres sont les niveaux d'intensité Ga et Gb représentant la hauteur du chapeau respectivement au centre, et de part et d'autre du centre du chapeau, en fonction du troisième paramètre qui est la largeur centrale La = (2a+1) du chapeau, et du quatrième paramètre qui est la largeur Lb = b de la partie externe du chapeau. On rappelle que pour cette première analyse du procédé, le cinquième paramètre yo a été figé dans une position particulière.

En portant maintenant dans l'équation 1b), les nouvelles expressions 2a) et 2b) trouvées pour Ga et Gb, on arrive à une nouvelle expression de l'erreur E :

$$E = \left\{ S_2^t - \left[ \frac{\left(S_1^b\right)^2}{2b} + \frac{\left(S_1^a\right)^2}{2a+1} \right] \right\} / (2a + 2b + 1) \quad 3)$$

Pour obtenir cette expression de l'erreur E, on a posé pour simplifier l'écriture que ;

$$S1(yo+a) = \sum_{y=1}^{y=yo+a} g(y) \quad 4a)$$

$$S1(yo-a-1) = \sum_{y=1}^{y=yo-a-1} g(y) \quad 4b)$$

$$S1(yo+a+b) = \sum_{y=1}^{y=yo+a+b} g(y) \quad 4c)$$

$$S1(yo-a-b-1) = \sum_{y=1}^{y=yo-a-b-1} g(y) \quad 4d)$$

$$S2(yo+a+b) = \sum_{y=1}^{y=yo+a+b} g^2(y) \quad 4e)$$

D'où il vient en écriture simplifiée que :

$$S_2^t = S_2(yo+a+b) - S_2(yo-a-b-1) \quad 5a)$$

$$S_1^a = S_1(yo+a)-S_1(yo-a-1) \qquad\qquad 5b)$$

$$S_1^b = S_1^{b_1}+S_1^{b_2} \qquad\qquad 5c)$$

$$S_1^{b_1}=S_1(yo-a-1)-S_1(yo-a-b-1) \qquad\qquad 5d)$$

$$S_1^{b_2}=S_1(yo+a+b)-S_1(yo+a) \qquad\qquad 5e)$$

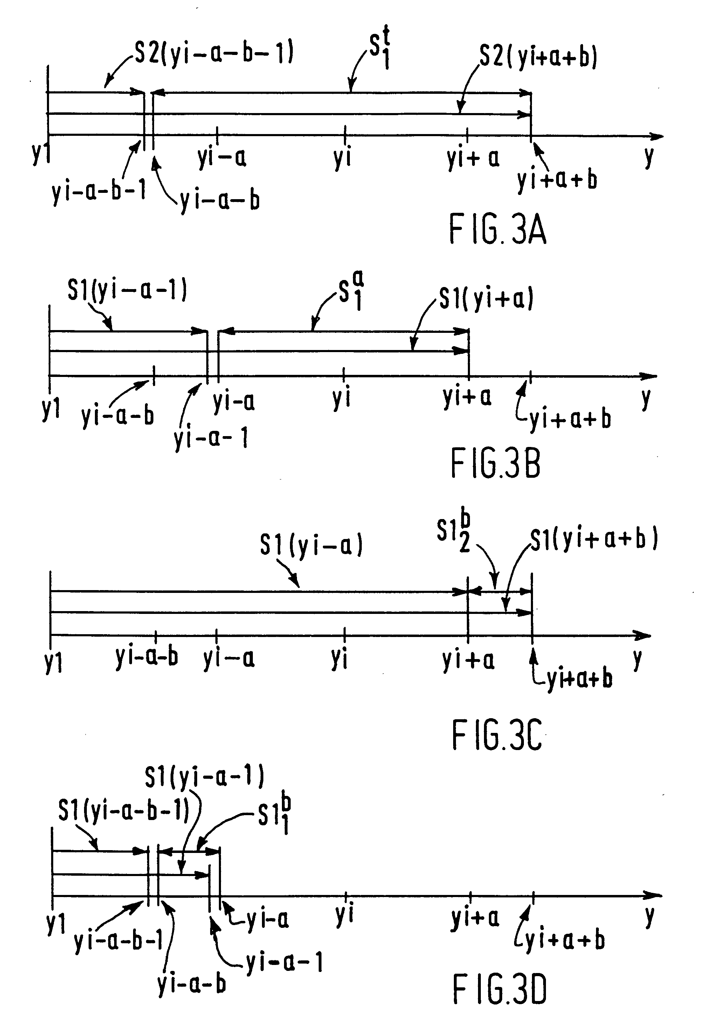

En référence à la FIG.3A, on considère que $S_2^t$ représente la différence entre la somme cumulée des intensités au carré dans l'intervalle des pixels entre le premier pixel de $\Delta$ et yo+a+b, et la somme cumulée des intensités au carré dans l'intervalle des pixels entre le premier pixel de $\Delta$ et yo-a-b-1. D'où il résulte que cet élément $S_2^t$ représente la somme cumulée des intensités des pixels, au carré, sur toute la longueur Lt du chapeau centré en yo, qui est considéré comme la position du pixel courant Pi fixé en yo pour cette étape du calcul.

En référence à la FIG.3B on considère que $S_1^a$ représente la différence entre la somme cumulée des intensités simples (c'est-à-dire non carrée) des pixels situés dans l'intervalle entre le premier pixel de $\Delta$ et yo+a, et la somme cumulée des intensités simples des pixels dans l'intervalle entre le premier pixel de $\Delta$ et yo-a-1.

En référence à la FIG.3C on considère que $S_1^{b\,2}$ représente la différence entre la somme cumulée des intensités simples des pixels situés dans l'intervalle entre le premier pixel de $\Delta$ et yo+a+b, et la somme cumulée des intensités simples dans l'intervalle entre le premier pixel de $\Delta$ et yo+a.

En référence à la FIG.3D, on considère que $S_1^{b1}$ représente la différence entre la somme cumulée des intensités simples des pixels situés dans l'intervalle entre le premier pixel de $\Delta$ et yo-a-1, et la somme cumulée des intensités simples des pixels situés dans l'intervalle entre le premier pixel de $\triangle$ et yo-a-b-1.

Ainsi pour calculer l'erreur quadratique E, il suffit en réalité de calculer une fois pour toute la somme cumulée des intensités simples ou la somme cumulée des intensités au carré pour tous les pixels de la droite de balayage $\triangle$ (ou tous les points ayant des intensités interpolées éventuellement), et de réaliser les soustraction et addition indiquées dans les relations 5a), 5b), 5c), 5d), 5e) pour aboutir à la relation 3) donnant la nouvelle expression de l'erreur quadratique E.

Cependant il faut prendre en compte que l'on cherche à réaliser les calculs de la manière la plus simple et la plus rapide possible. On cherche donc à minimiser le nombre des paramètres entrant dans cette relation 3) de E.

### II - Méthode N°1

A cet effet, dans une première méthode, on fixe A PRIORI la largeur totale du chapeau Lt égale à une constante en pixels. Donc Lt = La + Lb = (2a+1)+2b pixels est fixe ; la longueur La de la partie centrale du chapeau est variable ; et la largeur "b" des bords du chapeau s'adapte en fonction du paramètre "a" pour que la largeur Lt reste fixe.

Dans ces conditions, il reste que :

on avait fixé dans la phase d'analyse du procédé la valeur du paramètre yo, pour que le centre O du chapeau M (y) et le pixel courant soient confondus avec ce centre O et avec le centre du profil réel d'intensité g(y),

les autres paramètres, au nombre de 3, étaient a, b, Lt interdépendants.

Puisque l'on a maintenant fixé Lt, il reste seulement à déterminer la valeur de "a" qui minimise l'erreur quadratique exprimée par la formule 3).

Puisque l'on a fixé le paramètre Lt = 2a+2b+1, il en résulte que dans la formule 3) le terme $S_2^t$ est une constante. Ce qui fait que pour minimiser l'erreur E de la formule 3) il suffit de maximiser la fonction suivante V(a) :

$$V(a, yi) = \frac{(S_1^b)^2}{Lt-(2a+1)} + \frac{(S_1^a)^2}{2a+1} \qquad\qquad 6)$$

A cet effet on cherche la demi largeur "a" du modèle qui rend la fonction V(a) maximale. Cette valeur permet ensuite de calculer :

$$Gb = \frac{S_1^b}{Lt-(2a+1)} \quad 7a) \qquad et \; Ga = \frac{S_1^a}{2a+1} \quad 7b)$$

Mais l'homme du métier peut décider que les variations appliquées à la valeur "a" peuvent avoir des limites. On peut par exemple se fixer que l'on ne cherche pas à détecter les branches ou objets dont la largeur est supérieure à 50 pixels.

En effet, comme représentée sur la FIG.1A, la ligne de balayage A3 peut couper une branche telle que 5 dont la direction générale est parallèle à cette ligne de balayage. Dans ce cas, on ne cherche pas à déterminer la largeur découpée par A3 sur cette branche 5, mais on effectuera ultérieurement des balayages selon une autre direction, par exemple parallèles à la ligne B1 qui est perpendiculaire à A3, pour déterminer la largeur de la section I5 qui est réellement intéressante pour les applications médicales envisagées.

Il faut souligner que, dans la phase d'analyse, on est parti de l'hypothèse que le pixel courant Pi était déjà en yo à la fois centre de l'objet à déterminer et centre du chapeau idéalement placé, d'où il résultait que la demi largeur a(yo) trouvée était aussi la demi largeur de l'objet cherchée. Maintenant, il faut souligner que, dans la mise en oeuvre du procédé selon l'invention, la détermination de la position du centre yo de l'objet est précisément l'objet du procédé, ainsi que la détermination de la demi largeur a(yo). C'est pourquoi, dans cette première méthode, le procédé selon l'invention va comprendre plusieurs étapes.

a) Dans une première étape, on définit les directions et le nombre de droites de balayage $\Delta$.

b) Dans une seconde étape, on fixe le pixel courant Pi à la position yi de la droite de balayage $\Delta$, et en cette position yi ainsi fixée, on examine le critère formé par l'équation 6), V(a) et on cherche à déterminer le paramètre a(yi) qui maximise le critère V(a), c'est-à-dire qui minimise la fonction E de la relation 3). Si l'on choisit par exemple que la demi-largeur "a" du chapeau fait au plus 50 pixels, on effectuera donc 50 essais, le premier avec a = 1 pixel, le second avec a = 2 pixels et jusqu'à a = 50 pixels. D'une manière générale, on se fixe la demi-largeur a $\in$ [a1,am]. Ainsi, une fois choisi pour la demi-largeur "a" un intervalle déterminé, a1 à am, par exemple 1 à 50 pixels, on calcule autant de fois la valeur V(a) que l'on a déterminé de valeurs de "a" dans l'intervalle [a1,am] choisi. Parmi toutes ces valeurs de V(a), on détermine et on retient un maximum que l'on note V(yi) puisqu'il est relatif à la position yi du pixel courant à laquelle on fait les calculs. A ce maximum V(yi) correspond une valeur qui rend la fonction V(a) maximale pour yi fixé et Lt constant. A cet effet, en ce pixel Pi dont l'abscisse yi est ainsi fixée, on examine le critère formé par l'équation 6) dans laquelle :

$$S_1^a = S_1(yi+a) - S_1(yi-a-1) \qquad\qquad 5b')$$

$$S_1^b = S_1^{b_1} + S_1^{b_2} \qquad\qquad 5c')$$

$$S_1^{b1} = S_1(yi-a-1) - S_1(yi-a-b-1) \qquad\qquad 5d')$$

$$S_1^{b\,2} = S_1(yi+a+b) - S_1(yi+a) \qquad\qquad 5e')$$

comme il a été posé dans le précédent exposé du problème. Dans ce critère V en 6), le groupe $S_2^t$ n'est pas à calculer. Donc le calcul est simple.

Dans l'exposé précédent, on rappelle que ces sommes étaient définies comme :

$$S1(yi+a) = \sum_{y=1}^{y=yi+a} g(y) \qquad 4a')$$

$$S1(yi\text{-}a\text{-}1) = \sum_{y=1}^{y = yi\text{-}a\text{-}1} g(y) \qquad 4b')$$

$$S1(yi\text{+}a\text{+}b) = \sum_{y=1}^{y = yi\text{+}a\text{+}b} g(y) \qquad 4c')$$

$$S1(yi\text{-}a\text{-}b\text{-}1) = \sum_{y=1}^{y = yi\text{-}a\text{-}b\text{-}1} g(y) \qquad 4d')$$

$$S2(yi\text{+}a\text{+}b) = \sum_{y=1}^{y = yi\text{+}a\text{+}b} g^2(y) \qquad 4e')$$

$$S2(yi\text{-}a\text{-}b\text{-}1) = \sum_{y=1}^{y = yi\text{-}a\text{-}b\text{-}1} g^2(y) \qquad 4f')$$

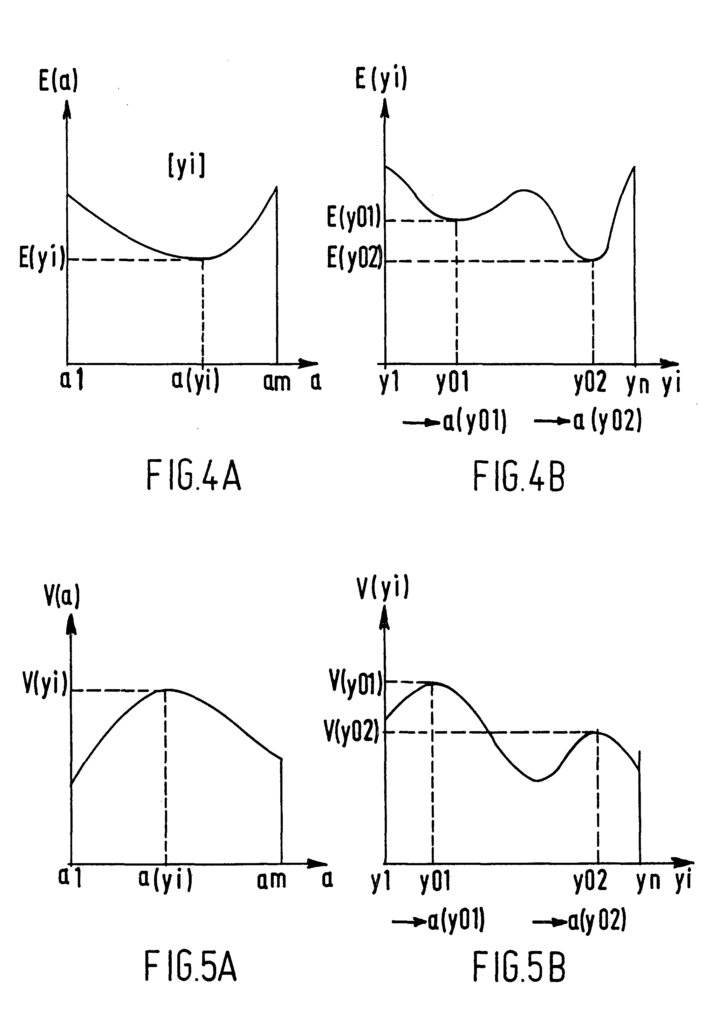

Sur la FIG.4A on a représenté la fonction V(a) en fonction de "a", l'intervalle choisi pour a $\in$ [a1,am], le maximum V(yi) et la demi largeur a(yi) qui lui correspond, pour Pi situé en yi.

c) Dans une troisième étape, on répète les calculs de l'étape précédente pour tous les pixels courant de la droite $\Delta$ ayant toutes les positions yi possibles dans un domaine où yi $\in$ [y1,yn]. Pour chaque différent pixel courant de position yi, ce calcul fournit une nouvelle valeur V(yi) correspondant à cette valeur yi et une nouvelle valeur a(yi), donc autant de valeurs V(yi), et de valeurs a(yi) que de positions yi différentes sur $\Delta$. Ayant alors toutes ces valeurs V(yi), en fonction de toutes les positions yi, on détermine ensuite quelle est la valeur particulière parmi les yi pour laquelle la fonction V(yi) présente un maximum. On appelle cette valeur yo. Ce maximum est appelé alors V(yo). A ce maximum V(yo) correspond donc en outre une valeur a(yo) du paramètre mesurant la demi-largeur "a".

Sur la FIG.4B, on a représenté l'ensemble des valeurs V(yi) déterminées à l'étape c) par la méthode de l'étape b), en fonction de la position yi des pixels courants correspondants. Cet ensemble de valeurs V(yi) peut montrer un (ou plusieurs) maximum (maxima) selon que la droite de balayage $\Delta$ rencontre un (ou plusieurs) objet(s) et donc détermine une (ou plusieurs) section(s) d'objets selon un(des) segment(s) I. S'il y a une section I d'objet, la FIG.4B montre une valeur de maximum V(yo) pour une position yo qui est donc celle du centre 0 du segment. A ces valeurs V(yo) et yo, on peut associer la valeur a(yo) qui est retenue comme demi largeur du segment I centré en yo.

d) Dans une étape suivante, on retient les valeurs de la position yo du centre O du segment I déterminé par la droite $\Delta$ rencontrant l'objet dans l'image et celle de la demi largeur a(yo), et on recommence les opérations en balayant l'image par d'autres droites parallèles à $\Delta$ puis éventuellement par des droites parallèles à d'autres directions.

Cependant, cette première méthode présente un défaut dans le cas où il se trouve, dans l'image numérique à traiter, des branches ou des objets séparés l'un de l'autre par un nombre de pixels faible, quelques pixels. En effet, il apparaît que, dans ce cas, l'erreur E est minimisée lorsque le chapeau est positionné à cheval sur les deux pics des profils d'intensité qui résultent de cette situation lors du balayage de l'image ; cela est le cas d'un balayage représenté particulièrement par la ligne A2 de la FIG.1A, les profils d'intensité correspondant étant représentés sur la FIG.2B. Donc, dans la situation de la FIG.2B, l'erreur est minimisée lorsque le chapeau encadre les deux pics d'intensité, alors que si le chapeau est centré sur l'un ou l'autre des deux pics, l'erreur est très grande.

Il en résulte que cette première méthode décrite ne permet pas de distinguer deux vaisseaux très rapprochés.

C'est pourquoi une seconde méthode est proposée.

**Méthode N°2**

Selon cette seconde méthode, au lieu de fixer la largeur totale Lt = La + Lb du chapeau, pour le calcul de l'énergie de l'erreur, on fixe la dimension Lb du bord du chapeau. Dans ces conditions, on pourra faire varier la largeur La de la partie centrale du chapeau et en déduire la dimension totale Lt puisque la dimension du bord Lb ne changera pas. Cette dimension Lb choisie pour le bord, qui peut être de quelques pixels, va définir la résolution de cette deuxième méthode, puisque c'est cette dimension qui permet de définir la distance minimale que peuvent avoir deux branches de la structure arborescente entre elles pour être distinguées l'une de l'autre, ou deux objets de l'image numérique. Si l'on a choisi une largeur Lb = 2 ou 3 pixels, on a ainsi défini que des branches distantes de 2 ou 3 pixels pourront être distinguées. En fait le choix de Lb résulte d'un compromis entre résolution et robustesse au bruit. Ainsi Lb = 1 pixel donnerait la résolution maximale mais une robustesse au bruit inférieure. Ensuite, on choisit un modèle, ou chapeau, de largeur centrale La variable. Cependant, pour limiter la masse des calculs à effectuer, on reprend dans cette seconde méthode l'idée exposée dans la première méthode qui consiste à exprimer l'énergie de l'erreur E en fonction des sommes cumulées des intensités effectuées le long de la ligne de balayage considérée $\triangle$. Selon l'invention, on a vu qu'il suffit de calculer ces sommes cumulées une fois pour toute, le long de chacune des lignes de balayage choisie. L'ensemble des calculs relatifs à cette seconde méthode est exactement le même que pour la première méthode jusqu'à l'expression de l'erreur en 3) :

$$E(a, yi) = \left\{ S_2^t - \left[ \frac{(S_1^b)^2}{2b} + \frac{(S_1^a)^2}{2a+1} \right] \right\} / (2a + 2b + 1) \qquad 3)$$

Dans cette seconde méthode :

Lb est fixe, c'est-à-dire b = constante en pixel,
a varie, c'est-à-dire la demi largeur a varie dans un intervalle $a \in [a1, am]$ Lt = 2a+2b+1 varie

Comme dans la première méthode précédemment décrite, on cherche à déterminer la position yo du centre d'un objet coupé selon un segment I par une droite de balayage $\triangle$ dans l'image numérique, ainsi que les points d'extrémité $\alpha$, $\beta$ de ce segment, c'est-à-dire sa demi-largeur a(yo). C'est pourquoi le procédé dans cette seconde méthode comprend les étapes suivantes :

a) Dans une première étape, on définit des droites de balayage $\triangle$ qui coupent éventuellement les objets de l'image selon des segments I et on détermine le profil réel d'intensité g(y) le long de la ligne $\triangle$.
b) Dans une seconde étape, on fixe le pixel courant Pi, à une position yi de la droite de balayage $\triangle$ ; à cet effet, en ce pixel Pi dont l'abscisse yi est ainsi fixée, on examine le critère formé par l'équation 3) dans laquelle :

$$S_2^t = S_2(yi+a+b) - S_2(yi-a-b-1) \qquad 5a')$$

$$S_1^a = S_1(yi+a) - S_1(yi-a-1) \qquad 5b')$$

$$S_1^b = S_1^{b_1} + S_1^{b_2} \qquad 5c')$$

$$S_1^{b1} = S_1(yi-a-1) - S_1(yi-a-b-1) \qquad 5d')$$

$$S_1^{b2} = S_1(yi+a+b) - S_1(yi+a)$$

comme il a été posé dans l'exposé de la première méthode. Dans ce critère E en 3), le groupe $S_2^t$ n'est pas constant comme c'était le cas dans la première méthode. Donc ce groupe $S_2^t$ est à calculer, car on ne peut trouver de simplification telle que V pour la première méthode.

De l'exposé de la première méthode on a retenu que :

$$S1(yi+a) = \sum_{y=1}^{y=yi+a} g(y) \quad 4a')$$

$$S1(yi-a-1) = \sum_{y=1}^{y=yi-a-1} g(y) \quad 4b')$$

$$S1(yi+a+b) = \sum_{y=1}^{y=yi+a+b} g(y) \quad 4c')$$

$$S1(yi-a-b-1) = \sum_{y=1}^{y=yi-a-b-1} g(y) \quad 4d')$$

$$S2(yi+a+b) = \sum_{y=1}^{y=yi+a+b} g^2(y) \quad 4e')$$

$$S2(yi-a-b-1) = \sum_{y=1}^{y=yi-a-b-1} g^2(y) \quad 4f')$$

En prenant en compte le critère E en 3), on cherche à déterminer le paramètre a(yi) qui minimise le critère E(a) avec

$$Gb = \frac{S_1^b}{2b} \quad 8a) \qquad et \; Ga = \frac{S_1^a}{(2a+1)} \quad 8b)$$

A cet effet, on choisit la demi-largeur "a" dans l'intervalle [a1,am] précédemment choisi. Parmi toutes ces valeurs de E(a), on détermine et on retient le minimum que l'on note E(yi) correspondant à un paramètre de demi-largeur que l'on note a(yi) ∈ [a1,am] car ces valeurs de minimum E(yi) et demi largeur a(yi) sont relatives au pixel courant de position yi sur la droite Δ. Sur la FIG.4A on a représenté la fonction V(a) en fonction de "a", l'intervalle choisi pour a ∈ [a1,am], le maximum E(yi) et la demi-largeur a(yi) qui lui correspond, pour Pi situé en yi.

c) Dans une troisième étape, on répète les calculs de la première étape pour tous les pixels courants de la droite Δ ayant toutes les positions yi possibles dans un domaine où yi ∈ [y1,yn]. Pour chaque pixel courant de position yi, ce calcul fournit une valeur E(yi) correspondant à la valeur yi et une valeur a(yi), donc autant de valeurs E(yi), et a(yi) que de positions yi sur Δ. Ayant alors toutes ces valeurs E(yi), en fonction de toutes les positions yi, on détermine ensuite quelle est la valeur parmi les yi pour laquelle la fonction E(yi) présente un minimum. On appelle cette valeur yo. Le minimum est appelé alors E(yo). A ce minimum E(yo) correspond donc en outre une valeur a(yo) du paramètre "a" de demi largeur. Sur la FIG.4B, on a représenté l'ensemble des valeurs E(yi) déterminées à l'étape précédente b) en fonction de la position yi des pixels courants correspondants. Cet ensemble de valeurs E(yi) peut montrer un (ou plusieurs) minimum local (minima locaux) selon que la droite de balayage Δ rencontre un (ou plusieurs) objet(s) et donc détermine une (ou plusieurs) section(s) I d'objets. S'il y a une section I d'objet, la FIG.4B montre une valeur de minimum E(yo) pour une position yo qui est donc celle du centre de la section I. A ces valeurs E(yo) et yo, on peut associer la valeur a(yo) qui est retenue comme demi-largeur de l'objet centré en yo.

d) Dans une étape suivante, on retient les valeurs de la position yo du centre O du segment I déterminé par la droite Δ rencontrant l'objet dans l'image et celle de la demi-largeur a(yo), et on recommence l'opération en balayant l'image par d'autres droites parallèles à Δ puis éventuellement par des droites parallèles à d'autres directions.

En référence à la FIG.2C, on montre que l'on peut ainsi détecter les positions yo1 et yo2 des centres O1 et 02 des deux objets donnant les deux pics du profil g(y). A cet effet, la distance 6 est choisie de l'ordre de la valeur de la distance qui sépare les deux objets. Deux modèles ou chapeaux M1 et M2 peuvent ainsi être positionnés de manière adéquate pour la détermination des centres et demi-largeur de chacun des objets.

Donc, en définitive, physiquement au moyen de chacune des deux méthodes selon l'invention, on a cherché la demi-largeur "a" de la partie centrale du chapeau qui minimise l'énergie d'erreur E de la formule 3). A cet effet, on a déplacé le chapeau le long de la droite de balayage Δ, en positionnant son centre à l'endroit de chaque pixel courant ; et pour chaque position du centre du chapeau en un pixel courant, on a cherché la valeur de la demi-largeur "a" de la partie centrale du chapeau qui minimisait l'énergie d'erreur E.

Eventuellement dans le cas de la première méthode où on a pu simplifier l'expression de l'énergie d'erreur E pour utiliser la formule V, et on a cherché des maxima de V au lieu des minima de E directement. On a obtenu ainsi une réponse c'est-à-dire une valeur d'erreur et une valeur de demi largeur "a" pour chaque pixel de la droite de balayage Δ. Parmi ces réponses, on a déterminé alors l'optimum ou les optima local(aux) (c'est-à-dire minimum, minima, ou maximum, maxima selon que l'on traite E ou V respectivement), ce qui fournit la position yo du (des) point(s) central(aux) du (des) profil(s) d'intensité g(y) le long de la droite de balayage Δ considérée. On en a déduit les valeurs correspondantes des demi-largeurs a(yo).

L'homme du métier pouvait penser au début que le calcul de la fonction E telle que définie dans la formulation 1) allait représenter un énorme travail. En effet, pour chaque pixel de chaque droite, si on avait traité directement la formule 1) il aurait fallu positionner le chapeau, définir sa largeur La, calculer toutes les différences Gb - g(y) et Ga - g(y), en fonction d'une largeur La de la partie centrale, élever au carré ces différences ; puis refaire le calcul pour une autre valeur de la largeur La etc..

Mais en fait, selon l'invention, on a déterminé les données dont on a besoin pour calculer l'énergie E de l'erreur recherchée, en effectuant simplement le calcul de la fonction somme du profil des intensités le long de la ligne de balayage Δ, et en le mémorisant. Cela revient à dire qu'il suffit d'effectuer la somme selon la direction de balayage Δ de toutes les intensités relatives à chaque pixel de cette direction. Cette somme donne une valeur qui grossit au fur et à mesure que l'on se replace sur la ligne dans le sens du balayage, du fait qu'à chaque pixel courant est affecté un niveau d'intensité de valeur positive. Si les niveaux d'intensité sont gradués entre O et 256 par exemple, et si la droite de balayage comprend 500 pixels, la somme à calculer aura une valeur d'au plus $500 \times 256$. On accumule tous les résultats. Il en résulte des rampes. Puis on effectue des différences entre les rampes décalées, ce qui fournit les données dont on a besoin pour calculer l'énergie E de l'erreur (ou bien V). Comme on exprime l'énergie de l'erreur E (ou bien V) en fonction de sommes cumulées du profil dont on vient de parler, il en résulte que cette énergie de l'erreur est facilement déterminable dès que l'on connaît l'intensité relative à chaque pixel de la droite de balayage Δ.

Dans la seconde méthode, il est nécessaire de calculer non seulement les sommes cumulées des intensités des pixels le long de chaque droite de balayage, mais aussi les sommes cumulées des intensités au carré.

Ensuite, par différence des sommes cumulées, en chaque point, on en déduit la valeur optimale pour la demi largeur de la partie centrale du chapeau. Le paramètre "a" est choisi comme la valeur qui optimise soit l'expression 3) de l'erreur E, soit l'expression V en 6), expressions qui ne dépendent que du paramètre a. A la suite de quoi, par expression des maxima locaux le long de la droite de balayage, on en déduit le centre de la branche ou objet coupé par la droite de balayage, puis la demi-largeur réelle du segment I délimité par la droite de balayage coupant cette branche ou objet.

Il faut noter que, d'abord, la première méthode, où on fixe le paramètre Lt et où il suffit de traiter l'expression simplifiée V, est plus simple et plus rapide à mettre en oeuvre que la seconde méthode. Mais elle est valable seulement lorsque l'image numérique contient des objets peu rapprochés. Ensuite, la deuxième méthode, où on fixe le paramètre b et où il faut traiter l'expression E qui inclut le calcul de carrés d'intensité, est un petit peu plus longue à mettre en oeuvre que la première méthode. Mais, en revanche, elle permet de déterminer les éléments centrés, et demi largeurs d'objets ayant toutes positions, même très rapprochées.

Enfin dans l'une et l'autre des deux méthodes décrites on peut mettre en oeuvre une étape supplémentaire : e) Dans cette étape, un test de validation peut être appliqué grâce aux paramètres Ga et Gb relatifs au chapeau qui s'expriment soit par les relations 7a, 7b, soit par les relations 8a, 8b selon la méthode choisie et grâce aux fonctions d'erreurs E(yo) ou V(yo). Ce test permet d'éviter :

la détection d'objets sans contraste vis-à-vis du fond, donc faisant vraisemblablement partie du fond et pour lequel Ga est environ égal à Gb ;
la détection d'objet qui ne correspond pas du tout au modèle choisi, et pour lesquels les fonctions E(yo) ou V(yo) affichent une valeur atypique (erreur entre modèle et signal trop importante).

Ce test consiste à réaliser une étape de calculs dans laquelle on détermine :
Ga(yo) et Gb(yo) 9) d'après les relations 7a), 7b) ou 8a), 8b). On décide que l'optimum calculé selon la première ou la seconde méthode V(yo) ou E(yo) n'est pas significatif d'un objet à prendre en compte ou à retenir,

si | Ga(yo) - Gb(yo)| < seuil $\ominus$,
si E(yo) > seuil $\varepsilon$,
ou si V(yo) < seuil T, selon la méthode choisie. Les seuils $\varepsilon$, T et $\ominus$ sont choisis par l'homme du métier pour permettre la détection d'objets ayant un profil d'intensité proche du modèle rectangulaire et ayant un niveau de luminance significatif contrastant sur un fond suffisamment uniforme. D'autres fonctions des paramètres Ga, Gb, E ou V plus compliquées que de simples seuillages peuvent aussi être mises en oeuvre, comme par exemple :

$$V(yo) \times |Ga(yo)-Gb(yo)| < seuil,$$

pour éliminer les objets non significatifs, c'est-à-dire mal modélisés ou dont l'intensité n'est pas suffisamment différente de celle du fond.

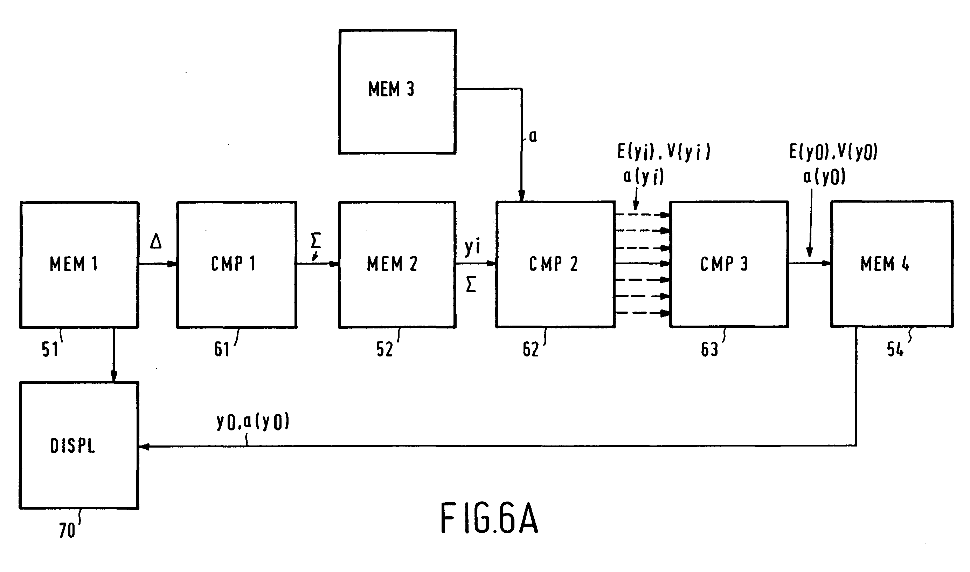

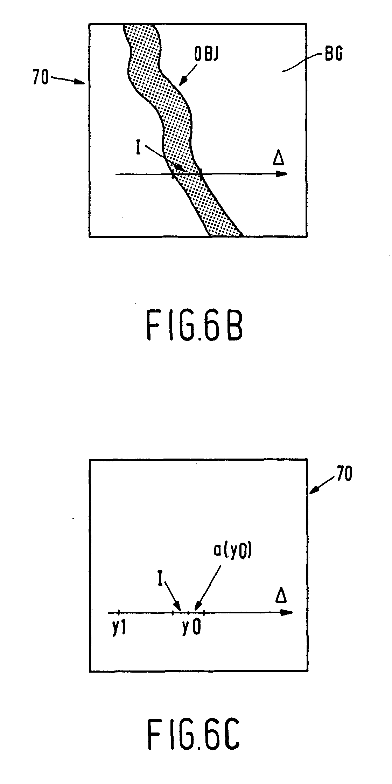

La FIG.6A montre un diagramme schématique de blocs représentant des moyens pour mettre en oeuvre le procédé décrit plus haut. En référence à la FIG.6A, on a représenté un arrangement qui permet de procéder au traitement d'une image, laquelle comporte la représentation d'au moins un objet OBJ constitué de pixels d'intensité sensiblement uniforme, contrastant sur un fond BG constitué de pixels d'intensité sensiblement uniforme comme montré sur la FIG.6B. Cet arrangement comprend :

des moyens de stockage 51 référencés premiers moyens de stockage MEM1 pour mémoriser des données d'image de l'image et fournir une droite $\Delta$ balayant cette image, ladite droite de balayage étant formée d'un ensemble de pixels adjacents, et coupant l'objet OBJ de l'image selon un segment I ;
des moyens de calcul 61 référencés premiers moyens de calcul CMP1 pour calculer des sommes cumulées $\Sigma$ des intensités et des intensités au carré des pixels adjacents sur tous les intervalles de cette droite de balayage $\Delta$, ces intervalles étant limités par un premier pixel référencé pixel origine y1 d'une part, et par respectivement chacun des pixels dudit ensemble de pixels, référencés pixels extrémités, d'autre part, comme montré sur les FIG.3;
des moyens de stockage 52 référencés seconds moyens de stockage MEM2 pour mémoriser les données issues des premiers moyens de calcul 61,
des moyens de calcul 63 référencés troisièmes moyens de calcul CMP3, pour effectuer la construction, sur ledit ensemble des pixels de la droite de balayage $\Delta$ d'une fonction desdites sommes cumulées référencée seconde fonction E(yi), V(yi), et pour effectuer l'estimation d'une valeur optimale E(yo), V(yo) de cette seconde fonction, comme montré sur les FIG.4B, et FIG.5B ;
des moyens de stockage 54 référencés quatrièmes moyens de stockage MEM4, pour mémoriser une valeur de l'abscisse yo d'un pixel de la droite de balayage $\Delta$, et une valeur a(yo) d'un paramètre a référencé paramètre de demi largeur, pour constituer l'abscisse du centre yo, et la demi largeur a(yo) dudit segment I déterminé par la droite $\triangle$ coupant l'objet OBJ. Ces valeurs yo et a(yo) sont respectivement, les valeurs qui procurent ladite valeur optimale E(yo), V(yo) de la seconde fonction des sommes cumulées construite par les troisièmes moyens de calcul ;
des moyens d'affichage DISPL pour afficher l'image, ces moyens ayant une matrice bidimensionnelle de pixels.

En référence à la FIG.6A, cet arrangement comprend en outre :

des moyens de stockage 53 référencés troisièmes moyens de stockage MEM3 pour mémoriser un paramètre a référencé paramètre de demi largeur, ce paramètre étant évalué en nombre de pixels variable entre deux limites (a1, am) ;
des moyens de calcul 62 référencés seconds moyens de calcul CMP2 pour effectuer le traitement de chaque pixel, référencé pixel courant Pi, défini par son abscisse yi sur la droite de balayage $\Delta$. Ces seconds moyens de calcul 62 incluent :

* des moyens pour déterminer une fonction E(a,yi), V(a,yi) référencée première fonction desdites sommes cumulées mémorisées $\Sigma$, relatives aux intervalles sur la droite de balayage $\Delta$, dont les pixels extrémités ont une abscisse définie par l'abscisse yi du pixel courant et par le paramètre de demi-largeur a,
* des moyens pour estimer une valeur optimale particulière E(yi), V(yi) de ladite première fonction relative au pixel courant Pi dans les limites (a1, am) dudit paramètre de demi largeur, comme montré sur les FIG.4A et FIG.5A. La seconde fonction des sommes cumulées étant ensuite construite en utilisant ces valeurs optimales particulières E(yi), V(yi), issues des seconds moyens de calcul 62 et relatives à tous les pixels de l'ensemble des pixels de la droite de balayage $\triangle$.

La FIG.6C représente schématiquement le résultat obtenu en sortie des quatrièmes moyens de stockage MEM4, c'est-à-dire l'abscisse sur la droite $\triangle$, dans l'image, du centre de l'objet, et les deux demi-largeurs a(yo) de part et d'autre du centre, permettant d'apprécier le segment I. L'arrangement de la FIG.6A permet de traiter toutes les droites de balayage voulues pour délimiter les centres et bords d'un objet OBJ avec précision.

**Revendications**

1. Procédé de traitement d'une image, laquelle comporte la représentation d'au moins un objet (OBJ) constitué de pixels d'intensité sensiblement uniforme, contrastant sur un fond (BG) constitué de pixels d'intensité sensiblement uniforme, ce procédé comprenant :

la détermination d'au moins une droite ($\Delta$) de balayage de l'image, formée d'un ensemble de pixels adjacents, et la détermination d'un segment (I) formé par ladite droite coupant ledit objet de l'image ;
le calcul et la mémorisation des sommes cumulées des intensités et des intensités au carré des pixels adjacents sur tous les intervalles de la droite limités par un pixel origine (y1) d'une part, et par respectivement chacun des pixels dudit ensemble de pixels, référencés pixels extrémités, d'autre part ;
la construction, sur ledit ensemble des pixels de la droite, d'une fonction [E(yi), V(yi)] desdites sommes cumulées, référencée seconde fonction, ladite construction comprenant la formulation, au moyen des dites sommes cumulées mémorisées, de la fonction de l'erreur quadratique entre une fonction [g(y)] d'intensité réelle des pixels sur l'ensemble des pixels de la droite de balayage et une fonction [M(y)] d'intensité d'un modèle binaire s'approchant au plus près du profil de la fonction d'intensité réelle [g(y)] ;
l'estimation de la valeur optimale [E(yo), V(yo)] de ladite seconde fonction ;
et l'estimation du centre (yo), et de la demi-largeur [a(yo)] dudit segment (I) de la droite ($\Delta$), comme, respectivement, la valeur de l'abscisse (yo) d'un pixel de ladite droite, et la valeur [a(yo)] d'un paramètre (a) référencé paramètre de demi-largeur qui procurent ladite valeur optimale [E(yo), V(yo)] de ladite seconde fonction.

2. Procédé selon la revendication 1, **caractérisé en ce que**, pour la construction de ladite seconde fonction des sommes cumulées [E(yi), V(yi)], sur ledit ensemble de pixels, il comprend :

la définition d'un paramètre (a) référencé paramètre de demi-largeur, évalué en nombre de pixels variable entre des limites (a1, am) ;
le traitement de chacun des pixels dudit ensemble sur la droite, selon un sens de balayage à partir dudit pixel origine (y1) avec, pour chaque pixel courant (Pi), défini par son abscisse (yi) sur la droite :

* la détermination d'une fonction [E(a,yi), V(a,yi)] desdites sommes cumulées mémorisées, référencée première fonction, relatives aux dits intervalles sur la droite, dont les pixels extrémités ont une abscisse définie par l'abscisse (yi) du pixel courant et par le paramètre de demi-largeur (a),
* l'estimation de la valeur optimale particulière [E(yi), V(yi)] de ladite première fonction relative audit pixel courant (Pi) dans les limites (a1, am) dudit paramètre de demi-largeur,

et en ce que dans la construction de ladite seconde fonction des sommes cumulées [E(yi), V(yi)], cette seconde fonction est constituée par une fonction desdites valeurs optimales particulières [E(yi), V(yi)].

3. Procédé de traitement d'image selon la revendication 2, **caractérisé en ce que** la détermination de ladite première fonction [E(a,yi), V(a,yi)] des sommes cumulées comprend :

la définition d'un modèle d'intensité rectangulaire (M(y)) sur ladite droite de balayage ayant une première partie centrale (Ma) de demi-largeur mesurée en pixels égale à la valeur dudit paramètre de demi-largeur (a) ; deux secondes parties externes (Mb1, Mb2) encadrant symétriquement la première partie centrale, de largeur mesurée en pixels référencée paramètre de largeur externe (b),

et l'estimation, audit pixel courant (Pi) des sommes cumulées des intensités des pixels au carré ($S_2^t$) sur la largeur totale (Lt = 2a + 2b + 1) du modèle, des intensités des pixels ($S_1^a$) sur la première partie centrale (Ma) du modèle et des intensités des pixels ($S_1^b$) sur chacune des secondes parties externes (Mb1, Mb2) du modèle, ledit modèle étant centré sur le pixel courant (Pi) défini par son abscisse (yi) sur ladite droite, pour chaque valeur du paramètre de demi-largeur (a) variant dans ses limites (a1, am), et ces sommes cumulées s'exprimant par des différences entre lesdites sommes cumulées des intensités des pixels simples ou au carré calculées sur tous les intervalles de la droite de balayage limités d'une part par ledit pixel origine (y1) et d'autre part par lesdits pixels extrémités constitués par les pixels de bords des première et seconde parties du modèle.

4. Procédé de traitement d'image selon la revendication 3, **caractérisé en ce que** le modèle d'intensité rectangulaire sur la droite de balayage est en outre défini par :

une première intensité (Ga) constante sur l'étendue de ladite première partie centrale,
une seconde intensité (Gb) constante, dans chacune des secondes parties externes (Mb1, Mb2), la différence des première et seconde intensités étant du signe de la différence des intensités entre ledit objet et ledit fond de l'image numérique, et en ce que la détermination de ladite première fonction [E(a,yi), V(a,yi)] des sommes cumulées comprend la formulation, au moyen desdites sommes cumulées mémorisées, de la fonction de l'erreur quadratique entre la fonction [g(y)] d'intensité réelle des pixels sur ledit ensemble des pixels de la droite de balayage, et la fonction d'intensité [Ga, Gb] du modèle rectangulaire.

5. Procédé selon la revendication 4, **caractérisé en ce que** la fonction de l'erreur quadratique entre la fonction [g(y)] d'intensité réelle et la fonction d'intensité du modèle [M(y)] s'exprime par ladite première fonction :

$$E(a, yi) = \left\{ S_2^t - \left[ \frac{(S_1^b)^2}{2b} + \frac{(S_1^a)^2}{2a+1} \right] \right\} / (2a + 2b + 1)$$

avec

$$Gb = \frac{S_1^b}{2b} \qquad et \; Ga = \frac{S_1^a}{(2a+1)}$$

première fonction dans laquelle, pour chaque position particulière (yi) du pixel courant (Pi), $S_2^t$ représente la somme cumulée des intensités des pixels au carré dans l'intervalle de pixels s'étendant sur toute la largeur (Lt) du modèle ([yi-a-b, yi+a+b]), $S_1^a$ représente la somme cumulée des intensités des pixels dans l'intervalle s'étendant sur la première partie centrale (Ma) du modèle ([yi-a, yi+a]), $S_1^b$ représente la somme cumulée des intensités de pixels dans l'un et dans l'autre intervalles s'étendant sur chacune des secondes parties externes du modèle (Mb1, Mb2) ([yi-a-b, yi-a-1]; [yi+a+1, yi+a+b]).

6. Procédé selon la revendication 5, **caractérisé en ce que** le paramètre de largeur des deux parties externes (Mb1, Mb2) du modèle est une constante dans la formulation de la fonction d'erreur quadratique et en ce que l'estimation de la valeur optimale particulière [E(yi)] de ladite première fonction relative audit pixel courant (Pi) est réalisée par la minimisation de ladite fonction.

7. Procédé selon la revendication 5, **caractérisé en ce que** les paramètres de largeur totale (Lt) du modèle est une constante dans la formulation de la fonction d'erreur quadratique et en ce que l'estimation de la valeur optimale particulière [E(yi)] de ladite première fonction relative au pixel courant est réalisée par la maximisation de la fonction :

$$V(a, yi) = \frac{(S_1^b)^2}{[Lt-(2a+1)]} + \frac{(S_1^a)^2}{(2a+1)}$$

avec

$$Gb = \frac{S_1^b}{Lt-(2a+1)} \qquad et \; Ga = \frac{S_1^a}{2a+1}$$

8. Procédé selon la revendication 7, **caractérisé en ce que** la valeur du paramètre de largeur (b) des secondes parties externes du modèle (Mb1, Mb2) détermine la résolution du procédé et est à cet effet choisi inférieur à 10 pixels en compromis avec la robustesse au bruit.

9. Procédé selon l'une des revendications 6, 7 ou 8, **caractérisé en ce qu'**il comprend en outre la fixation de seuils pour ne traiter dans l'image numérique que des objets significatifs, lesdits seuils incluant des premiers types de seuils imposés aux dites valeurs optimales [E(yo), V(yo)] de la fonction d'erreur correspondant à l'ordonnée du centre (yo) déterminé pour un desdits objets potentiellement significatifs, et des seconds types de seuils imposés sur la différence entre les deux niveaux d'intensités (Ga, Gb) du modèle rectangulaire [M(y)] centré en cette abscisse (yo) du centre dudit objet.

10. Procédé selon l'une des revendications précédentes **caractérisé en ce que** la valeur du paramètre (a) de demi-largeur est comprise entre 5 et 50 pixels, et en ce que l'intervalle [y1,yn] de balayage du pixel courant (yi) sur une droite (Δ) est comprise entre 50 et 1000 pixels.

11. Procédé selon l'une des revendications précédentes, **caractérisé en ce que** les directions des droites de balayage sont quelconques, et que dans ce cas, ce procédé comprend :

la définition de points sur ces droites d'abscisses (yi), régulièrement répartis,
et le calcul de l'intensité en chaque point par un procédé d'interpolation en fonction des intensités des pixels d'un voisinage donné autour de chaque point, en affectant éventuellement les intensités de ces pixels voisins d'un poids d'autant plus faible que ces pixels sont plus éloignés du point considéré.

12. Arrangement pour procéder au traitement d'une image, laquelle comporte la représentation d'au moins un objet (OBJ) constitué de pixels d'intensité sensiblement uniforme, contrastant sur un fond (BG) constitué de pixels d'intensité sensiblement uniforme, cet arrangement comprenant :

des moyens de stockage (51) référencés premiers moyens de stockage (MEM1) pour mémoriser des données d'image de ladite image et fournir une droite (Δ) balayant ladite image, ladite droite de balayage étant formée d'un ensemble de pixels adjacents, et coupant ledit objet (OBJ) de l'image selon un segment (I) ;
des moyens de calcul (61) référencés premiers moyens de calcul (CMP1) pour calculer des sommes cumulées (Σ) des intensités et des intensités au carré des pixels adjacents sur tous les intervalles de ladite droite de balayage (Δ), ces intervalles étant limités par un premier pixel référencé pixel origine (y1) d'une part, et par respectivement chacun des pixels dudit ensemble de pixels, référencés pixels extrémités, d'autre part :

des moyens de stockage (52) référencés seconds moyens de stockage (MEM2) pour mémoriser les données issues des premiers moyens de calcul (61),
des moyens de calcul (63) référencés troisièmes moyens de calcul (CMP3), pour effectuer la construction, sur ledit ensemble des pixels de la droite de balayage (Δ) d'une fonction desdites sommes cumulées référencée seconde fonction [E(yi), V(yi)], ladite construction comprenant la formulation, au moyen des dites sommes cumulées mémorisées, de la fonction de l'erreur quadratique entre une fonction [g(y)] d'intensité réelle des pixels sur l'ensemble des pixels de la droite de balayage et une fonction [M(y)] d'intensité d'un modèle binaire s'approchant au plus près du profil de la fonction d'intensité réelle [g(y)] ; et pour effectuer l'estimation d'une valeur optimale [E(yo), V(yo)] de ladite seconde fonction construite relative audit ensemble de pixels de la droite ;
des moyens de stockage (54) référencés quatrièmes moyens de stockage (MEM4), pour mémoriser une valeur de l'abscisse (yo) d'un pixel de la droite de balayage (Δ), et une valeur [a(yo)] d'un paramètre (a) référencé paramètre de demi-largeur, pour constituer l'abscisse du centre (yo), et la demi-largeur [a(yo)]

dudit segment (I) déterminé par ladite droite (Δ) coupant ledit objet (OBJ) de l'image, comme, respectivement, les valeurs qui procurent ladite valeur optimale [E(yo), V(yo)] de ladite seconde fonction des sommes cumulées construite par lesdits troisième moyens de calcul ;
des moyens d'affichage pour afficher ladite image, ayant une matrice bidimensionnelle de pixels.

**13.** Arrangement selon la revendication 12, comprenant en outre :

des moyens de stockage (53) référencés troisièmes moyens de stockage (MEM3) pour mémoriser un paramètre (a) référencé paramètre de demi-largeur, ledit paramètre étant évalué en nombre de pixels variable entre deux limites (a1, am) ;
des moyens de calcul (62) référencés seconds moyens de calcul (CMP2) pour effectuer le traitement de chaque pixel, référencé pixel courant (Pi), défini par son abscisse (yi) sur la droite de balayage (Δ), lesdits seconds moyens de calcul (62) incluant :

* des moyens pour déterminer une fonction [E(a,yi), V(a,yi)] référencée première fonction desdites sommes cumulées mémorisées (Σ), relatives aux dits intervalles sur la droite de balayage (Δ), dont les pixels extrémités ont une abscisse définie par l'abscisse (yi) du pixel courant et par le paramètre de demi-largeur (a),
* des moyens pour estimer une valeur optimale particulière [E(yi), V(yi)] de ladite première fonction relative audit pixel courant (Pi) dans les limites (a1, am) dudit paramètre de demi-largeur,

ladite seconde fonction des sommes cumulées étant ensuite construite en utilisant lesdites valeurs optimales particulières [E(yi), V(yi)], issues desdits seconds moyens de calcul (62) et relatives à tous les pixels de l'ensemble des pixels de la droite de balayage (Δ).

## Claims

**1.** A method of processing an image which includes the representation of at least one object (OBJ) consisting of pixels of substantially uniform intensity contrasted against a background (BG) consisting of pixels of substantially uniform intensity, this method comprising:

the determination of at least one image scan trace (Δ) formed by a set of adjacent pixels and the determination of a segement (I) formed by said trace cutting said object of the image;
the computation and storage of the cumulated sums of the intensities and of the squared intensities of the adjacent pixels over all the intervals of the trace which are delimited by an origin pixel (y1), on the one hand, and by each of the pixels, respectively, of said set of pixels, labelled end pixels, on the other;
the construction, over said set of pixels of the trace, of a function [E(yi), V(yi)] of said cumulated sums, labelled second function, and said construction comprising the formulation, by means of said stored cumulated sums, of the quadratic error function between a real intensity function [g9Y0] of the pixels over the set of the pixels of the scan trace and an intensity function [M(y)] of a binary model which come nearest to the profile of the real intensity function [g(y)];
the estimation of the optimal value [E(yo), V(yo)] of said second function;
and the estimation of the centre (yo) and of the semi-width [a(yo)] of said segment (I) of the trace (Δ), as, respectively, the value of the abscissa (yo) of a pixel of said trace, and the value [a(yo)] of a parameter (a) labelled semi-width parameter which yield said optimal value [E(yo), V(yo)] of said second function.

**2.** A method as claimed in Claim 1, **characterized in that**, for the construction of said second function of the cumulated sums [E(yi), V(yi)] over said set of pixels, it comprises:

the definition of a parameter (a) labelled semi-width parameter, evaluated as a number of pixels variable between limits (a1, am);
the processing of each of the pixels of said set over the trace, in a scan direction starting from said origin pixel (y1) with, for each current pixel (Pi), defined by its abscissa (yi) on the trace:

* the determination of a function [E(a,yi), V(a,yi)] of said stored cumulated sums, labelled first function, relating to said intervals on the trace, the end pixels of which have an abscissa defined by the abscissa (yi) of the current pixel and by the semi-width parameter (a),
* the estimation of the particular optimal value [E(yi), V(yi)] of said first function relating to said current pixel (Pi) within the limits (a1, am) of said semi-width parameter, and in that in the construction of said second function of the cumulated sums [E(yi), V(yi)], this second function consists of a function of said particular optimal values [E(yi), V(yi)].

3. An image processing method as claimed in Claim 2, **characterized in that** the determination of said first function [E(a,yi), V(a,yi)] of the cumulated sums comprises:

the definition of a rectangular intensity model (M(y)) over said scan trace having a first central portion (Ma) of semi-width measured in pixels equal to the value of said semi-width parameter (a); two second outer portions (Mb1, Mb2) symmetrically flanking the first central portion, of width measured in pixels labelled outer width parameter (b),
and the estimation, at said current pixel (Pi) of the cumulated sums of the squared intensities $(S_2^t)$ of the pixels over the total width (Lt = 2a + 2b + 1) of the model, of the intensities of the pixels $(S_1^a)$ over the first central portion (Ma) of the model, and of the intensities of the pixels $(S_1^b)$ over each of the second outer portions (Mb1, Mb2) of the model,

said model being centred on the current pixel (Pi) defined by its abscissa (yi) on said trace, for each value of the semi-width parameter (a) varying within its limits (a1, am), and these cumulated sums being expressed by differences between said cumulated sums of the simple or squared intensities of the pixels computed over all the intervals of the scan trace which are limited, on the one hand, by said origin pixel (y1) and, on the other, by said end pixels consisting of the edge pixels of the first and second portions of the model.

4. An image processing method as claimed in Claim 3, **characterized in that** the rectangular intensity model over the scan trace is furthermore defined by:

a first constant intensity (Ga) over the extent of said first central portion,
a second constant intensity (Gb), within each of the second outer portions (Mb1, Mb2), the difference of the first and second intensities having the sign of the difference of the intensities between said object and said background of the digital image, and in that the determination of said first function [E(a,yi), V(a,yi)] of the cumulated sums comprises the formulation, by means of said stored cumulated sums, of the function of the quadratic error between the actual intensity function [g(y)] of the pixels over said set of pixels of the scan trace, and the intensity function [Ga, Gb] of the rectangular model.

5. A method as claimed in Claim 4, **characterized in that** the function of the quadratic error between the actual intensity function (g(y)) and the intensity function of the model (M(y)) is expressed by said first function:

$$E(a, yi) = \left\{ S_2^t - \left[ \frac{(S_1^b)^2}{2b} + \frac{(S_1^a)^2}{2a+1} \right] \right\} / (2a + 2b + 1) \, 1$$

with

$$Gb = \frac{S_1^b}{2b} \qquad \text{and } Ga = \frac{S_1^a}{(2a+1)}$$

a first function in which, for each particular position (yi) of the current pixel (Pi), $S_2^t$ represents the cumulated sum of the squared intensities of the pixels within the interval of pixels extending over the whole width (Lt) of the model ([yi-a-b, yi+a+b]), $S_1^a$ represents the cumulated sum of the intensities of the pixels within the interval extending over the first central portion (Ma) of the model ([yi-a, yi+a]), $S_1^b$ represents the cumulated sum of the intensities of the pixels within one and within the other interval extending over each of the second outer portions of the model (Mb1, Mb2) ([yi-a-b, yi-a-1]; [yi+a+1, yi+a+b]).

6. A method as claimed in Claim 5, **characterized in that** the width parameter of the two outer portions (Mb1, Mb2) of the model is a constant in the formulation of the quadratic error function and in that the estimation of the particular optimal value [E(yi)] of said first function relating to said current pixel (Pi) is carried out by minimization of said function.

7. A method as claimed in Claim 5, **characterized in that** the total width parameters (Lt) of the model are a constant in the formulation of the quadratic error function and in that the estimation of the particular optimal value [E(yi)] of said first function relating to the current pixel is carried out by maximization of the function:

$$V(a,yi) = \frac{(S_1{}^b)^2}{[Lt-(2a+1)]} + \frac{(S_1{}^a)^2}{(2a+1)}$$

with

$$Gb = \frac{S_1{}^b}{Lt-(2a+1)} \qquad \text{and } Ga = \frac{S_1{}^a}{2a+1}$$

8. A method as claimed in Claim 7, **characterized in that** the value of the width parameter (b) of the second outer portions of the model (Mb1, Mb2) determines the resolution of the method and is for this purpose chosen to be less than 10 pixels as a compromise with the robustness to noise.

9. A method as claimed in one of Claims 6, 7 or 8, **characterized in that** it furthermore comprises the fixing of thresholds so as to process in the digital image only significant objects, said thresholds including first types of thresholds imposed on said optimal values [E(yo), V(yo)] of the error function corresponding to the ordinate of the centre (yo) determined for one of said potentially significant objects, and second types of thresholds imposed on the difference between the two intensity levels (Ga, Gb) of the rectangular model (M(y)) centred at this abscissa (yo) of the centre of said object.

10. A method as claimed in one of the preceding claims, **characterized in that** the value of the semi-width parameter (a) is between 5 and 50 pixels, and in that the scan interval [yl,yn] for the current pixel (yi) on a trace (Δ) is between 50 and 1,000 pixels.

11. A method as claimed in one of the preceding claims, **characterized in that** the directions of the scan traces are arbitrary, and that in this case, this method comprises:

the defining of points on these traces with regularly distributed abscissae (yi),
and the computation of the intensity at each point by a method of interpolation as a function of the intensities of the pixels of a given neighborhood about each point, optionally assigning the intensities of these neighboring pixels a weight which decreases the further these pixels are away from the relevant point.

12. An arrangement for processing an image including the representation of at least one object (OBJ) consisting of pixels of substantially uniform intensity contrasted against a background (BG) consisting of pixels of substantially uniform intensity, this arrangement comprising:

storage means (51) labelled first storage means (MEM1) for storing image data of said image and for providing a trace (Δ) scanning said image, said scan trace being formed by a set of adjacent pixels and cutting said object (OBJ) of the image in a segment (I);
computing means (61) labelled first computing means (CMP1) for computing cumulated sums (∑) of the intensities and squared intensities of adjacent pixels over all the intervals of said scan trace (Δ), these intervals being limited by a first pixel labelled origin pixel (y1), on the one hand, and, respectively, each one of the pixels of said set of pixels, labelled the end pixels, on the other;
storage means (52) labelled second storage means (MEM2) for storing the output data of said first computing means (61);
computing means (63) labelled third computing means (CMP3) for constructing, on said set of pixels of the scan trace (Δ), a function of said cumulated sums labelled second function [E(yi), V(yi)] said construction comprising the formulation, by means of said stored cumulated sums, of the quadratic error function between a real intensity function [g9Y0] of the pixels over the set of the pixels of the scan trace and an intensity function [M(y)] of a binary model which come nearest to the profile of the real intensity function [g(y)]; and for further estimating an optimal value [E(yo), V(yo)] of said second function constructed relative to said set of pixels of the trace;

storage means (54) labelled fourth storage means (MEM4) for storing a value of the abscissa (yo) of a pixel of the scan trace ($\Delta$), and a value [a(yo)] of a parameter (a) labelled semi-width parameter, to constitute the abscissa of the centre (yo), and the semi-width [a(yo)] of said segment (I) determined by said trace ($\Delta$), cutting said object (OBJ) of the image, as, respectively, the values which yield said optimal value [E(yo), V(yo)] of said second function of the cumulated sums, constructed by said third computing means;

display means for displaying said image, having a two-dimensional matrix of pixels.

**13.** An arrangement as claimed in Claim 12, further comprising:

storage means (53) labelled third storage means (MEM3) for storing a parameter (a) labelled semi-width parameter, said parameter being evaluated as a number of pixels variable between two limits (a1, am);

computing means (62), labelled second computing means (CMP2), for processing each pixel, labelled current pixel (Pi) defined by its abscissa (yi) on the scan trace ($\Delta$), said second computing means (62) including:

* means for determining a function [E(a,yi), V(a,yi)] labelled first function of said stored cumulated sums ($\sum$), relative to said intervals on the scan trace ($\Delta$), of which the end pixels have an abscissa defined by the abscissa (yi) of the current pixel and by the semi-width parameter (a),
* means for computing a particular optimal value [E(yi), V(yi)] of said first function related to said current pixel (Pi) within the limits (a1, am) of said semi-width parameter,

said second function of the cumulated sums then being constructed by using said particular optimal values [E(yi), V(yi)] issued of said second computing means (62), and related to all pixels of the set of pixels of the scan trace ($\Delta$).

## Patentansprüche

**1.** Bildverarbeitungsverfahren, das die Darstellung mindestens eines Objektes (OBJ) beinhaltet, aus Pixeln weitgehend gleichförmiger Intensität gebildet, kontrastierend zu dem aus Pixeln weitgehend gleichförmiger Intensität gebildeten Hintergrund (BG), wobei dieses Verfahren beinhaltet:

die Bestimmung mindestens einer Abtastgeraden ($\Delta$) des Bildes, gebildet aus einem angrenzenden Pixelsatz, und die Bestimmung des Abschnitts (I), gebildet von der besagten Geraden, die das besagte Objekt des Bildes schneidet;

die Berechnung und Speicherung der kumulierten Summen der Intensitäten und der quadratischen Intensitäten der angrenzenden Pixel über alle Intervalle der Geraden, begrenzt durch ein Ausgangspixel (y1) einerseits, und respektive jedes der Pixel des besagten Pixelsatzes mit der Bezeichnung Randpixel, andererseits;

die Konstruktion über den besagten Pixelsatz der Geraden einer Funktion [E(yi), V(yi)] der besagten kumulierten Summen mit der Bezeichnung zweite Funktion, wobei die besagte Konstruktion die Formulierung mittels der besagten gespeicherten kumulierten Summen der quadratischen Fehlerfunktion zwischen einer Funktion [g(y)] der reellen Intensität der Pixel über den Pixelsatz der Abtastgeraden und eine Funktion [M(y)] der Intensität eines binären Modells beinhaltet, die dem Profil der Funktion der reellen Intensität [g(y)] so nahe wie möglich kommt;

die Bewertung des optimalen Werts [E(yo), V(yo)] der besagten zweiten Funktion;

und die Bestimmung der Mitte (yo) und der halben Breite [a(yo)] des besagten Abschnitts der Geraden ($\Delta$), wie respektive des Werts der Abszisse (yo) eines Pixels der besagten Geraden, und des Werts [a(yo)] eines Parameters (a) mit der Bezeichnung Parameter der halben Breite, die den besagten optimalen Wert [E(yo), V(yo)] der besagten zweiten Funktion liefern.

**2.** Verfahren nach Anspruch 1, **dadurch gekennzeichnet, daß** es für die Konstruktion der besagten zweiten Funktion der kumulierten Summen [E(yi), V(yi)] über den Pixelsatz beinhaltet:

die Definition eines Parameters (a) mit der Bezeichnung Parameter der halben Breite, bewertet an der Anzahl variabler Pixel zwischen den Grenzen (a1,am);

die Verarbeitung jedes der Pixel des besagten Satzes auf der Geraden in einer Abtastrichtung ausgehend vom Ausgangspixel (y1), mit, für jedes der laufenden Pixel (Pi), definiert durch seine Abszisse (yi) auf der Geraden:

* der Bestimmung einer Funktion [E(a,yi), V(a,yi)] der besagten gespeicherten kumulierten Summen mit der Bezeichnung erste Funktion, relativ zu den besagten Intervallen auf der Geraden, wobei die Randpixel eine durch die Abszisse (yi) des laufenden Pixels und durch den Parameter der halben Breite (a) definierte Abszisse haben,

* der Bewertung des besonderen optimalen Wertes [E(yi), V(yi)] der besagten ersten Funktion relativ zum besagten laufenden Pixel (Pi) innerhalb der Grenzen (a1,am) des besagten Parameters der halben Breite,

und dadurch, daß bei der Konstruktion der besagten zweiten Funktion der kumulierten Summen [E(yi), V(yi)] diese zweite Funktion durch eine Funktion der besagten besonderen optimalen Werte [E(yi), V(yi)] gebildet wird.

3. Bildverarbeitungsverfahren nach Anspruch 2, **dadurch gekennzeichnet, daß** die Bestimmung der besagten ersten Funktion [E(a,yi), V(a,yi)] der kumulierten Summen beinhaltet:

die Definition eines rechteckigen Intensitätsmodells (M(y)) über die besagte Abtastgerade mit einem ersten mittleren Teil (Ma) halber Breite, gemessen in Pixeln gleich dem Wert des besagten Parameters der halben Breite (a); zwei zweite externe Teile (Mb1, Mb2) umgeben symmetrisch den ersten mittleren Teil, einer in Pixeln gemessenen Breite mit der Bezeichnung Parameter der externen Breite (b),
die Bewertung zu dem besagten laufenden Pixel (Pi) der kumulierten Summen der Intensitäten der Pixel im Quadrat ($S_2^t$) über die Gesamtbreite (Lt = 2a + 2b + 1) des Modells, der Intensitäten der Pixel ($S_1^a$) über den ersten mittleren Teil (Ma) des Modells und der Intensitäten der Pixel ($S_1^b$) über jeden der zweiten externen Teile (Mb1, Mb2) des Modells,

wobei das besagte Modell auf das laufende Pixel (Pi) zentriert ist, definiert durch seine Abszisse (yi) auf der besagten Geraden, für jeden Wert des Parameters der halben Breite (a), innerhalb seiner Grenzen (a1,am) variierend, wobei diese kumulierten Summen über die Differenzen zwischen den besagten kumulierten Summen der Intensitäten der einfachen oder quadratischen Pixel ausgedrückt werden, berechnet über sämtliche Intervalle der Abtastgeraden, begrenzt einerseits von dem besagten Ausgangspixel (y1) und andererseits von den besagten Endpixeln, gebildet von den Randpixeln der ersten und zweiten Teile des Modells.

4. Bildverarbeitungsverfahren nach Anspruch 3, **dadurch gekennzeichnet, daß** das rechteckige Intensitätsmodell auf der Abtastgeraden zudem definiert wird durch:

eine erste Intensität (Ga) konstant über den Umfang des besagten ersten mittleren Teils,
und eine zweite Intensität (Gb), konstant in jedem der zweiten externen Teile (Mb1, Mb2), wobei die Differenz der ersten und zweiten Intensitäten dem Vorzeichen der Differenz der Intensitäten zwischen dem besagten Objekt und dem besagten Hintergrund des digitalen Bilds entsprechen,

und dadurch, daß die Bestimmung der besagten ersten Funktion [E(a,yi), V(a,yi)] der kumulierten Summen die Formulierung beinhaltet, mittels der besagten gespeicherten kumulierten Summen, der quadratischen Fehlerfunktion zwischen der Funktion [g(y)] der reellen Intensität der Pixel über den besagten Pixelsatz der Absatzgeraden und der Intensitätsfunktion [Ga, Gb] des rechteckigen Modells.

5. Verfahren nach Anspruch 4, **dadurch gekennzeichnet, daß** die quadratische Fehlerfunktion zwischen der Funktion [g(y)] der reellen Intensität und der Intensitätsfunktion des Modells [M(y)] über die besagte erste Funktion ausgedrückt wird:

$$E(a, yi) = \left\{ S_2^t - \left[ \frac{(S_1^b)^2}{2b} + \frac{(S_1^a)^2}{2a+1} \right] \right\} / (2a + 2b + 1),$$

mit

$$Gb = \frac{S_1^b}{2b} \qquad \text{und } Ga = \frac{S_1^a}{(2a+1)},$$

wobei in dieser ersten Funktion für jede besondere Position (yi) des laufenden Pixels (Pi) $S_2^t$ die kumulierte Summe der Intensitäten der quadratischen Pixel im Intervall der Pixel darstellt, über die gesamte Breite (Lt) des Modells ([yi-a-b, yi+a+b]) umfassend, $S_1^a$ die kumulierte Summe der Intensitäten der Pixel im Intervall darstellt, den ersten mittleren Teil (Ma) des Modells ([yi-a, yi+a]) umfassend, $S_1^b$ die kumulierte Summe der Intensitäten der Pixel im einen und anderen Intervall darstellt, jeden der zweiten externen Teile des Modells (Mb1, Mb2) ([yi-a-b, yi-a-1]; [yi+a+1, yi+a+b]) umfassend.

6. Verfahren nach Anspruch 5, **dadurch gekennzeichnet, daß** der Parameter der Breite der beiden externen Teile (Mb1, Mb2) des Modells eine Konstante bei der Formulierung der quadratischen Fehlerfunktion ist, und daß die Bewertung des besonderen optimalen Werts [E(yi)] der besagten ersten Funktion relativ zum besagten laufenden Pixel (Pi) über die Minimierung der besagten Funktion vorgenommen wird.

7. Verfahren nach Anspruch 5, **dadurch gekennzeichnet, daß** die Parameter der Gesamtbreite (Lt) des Modells eine Konstante bei der Formulierung der quadratischen Fehlerfunktion ist, und daß die Bewertung des besonderen optimalen Werts [E(yi)] der besagten ersten Funktion relativ zum besagten laufenden Pixel über die Maximierung erhalten wird der Funktion:

$$V(a,yi) = \frac{(S_1^b)^2}{[Lt-(2a+1)]} + \frac{(S_1^a)^2}{(2a+1)}$$

mit

$$Gb = \frac{S_1^b}{Lt-(2a+1)} \qquad \text{und } Ga = \frac{S_1^a}{2a+1}$$

8. Verfahren nach Anspruch 7, **dadurch gekennzeichnet, daß** der Wert des Parameters der Breite (b) der zweiten externen Teile des Modells (Mb1, Mb2) die Auflösung des Verfahrens bestimmt und dafür unter 10 Pixeln gewählt wird, als Kompromiß zur Robustheit gegenüber dem Rauschen.

9. Verfahren nach einem der Ansprüche 6, 7 oder 8, **dadurch gekennzeichnet, daß** es zudem die Festlegung von Grenzen beinhaltet, um im digitalen Bild nur signifikante Objekte zu verarbeiten, wobei die besagten Schwellen erste Grenztypen beinhalten, den besagten optimalen Werten [E(yo), V(yo)] der Fehlerfunktion vorgegeben, entsprechend der Ordinate der Mitte (yo), bestimmt für die besagten, potentiell signifikanten Objekte, und zweite Grenztypen, zur Differenz zwischen den beiden Intensitätsdichten (Ga, Gb) des rechteckigen Modells [M(y)] vorgegeben, auf dieser Abszisse (yo) der Mitte des besagten Objektes zentriert.

10. Verfahren nach einem der vorhergehenden Ansprüche, **dadurch gekennzeichnet, daß** der Wert des Parameters (a) der halben Breite zwischen 5 und 50 Pixeln enthalten ist, und daß das Intervall [yl,yn] zum Abtasten des laufenden Pixels (yi) auf einer Geraden ($\Delta$) zwischen 50 und 1000 Pixeln enthalten ist.

11. Verfahren nach einem der vorhergehenden Ansprüche, **dadurch gekennzeichnet, daß** die Richtungen der Abtastgeraden beliebig sind, und daß das Verfahren in diesem Falle beinhaltet:

   die Definition der Punkte auf diesen Geraden der Abszissen (yi), regelmäßig verteilt,
   und die Berechnung der Intensität an jedem Punkt über ein Interpolationsverfahren unter Berücksichtigung der Pixel einer gegebenen Umgebung um jeden Punkt, mit eventueller Zuteilung der Intensitäten dieser benachbarten Pixel eines um so geringeren Stellenwerts, je mehr die Pixel vom betrachteten Punkt entfernt sind.

12. Anordnung zur Vornahme einer Bildverarbeitung, die die Darstellung mindestens eines Objektes (OBJ) beinhaltet, bestehend aus Pixeln weitgehend gleichförmiger Intensität, im Kontrast zu einem Hintergrund (BG), bestehend aus Pixeln weitgehend gleichförmiger Intensität, wobei diese Anordnung enthält:

   Speichermittel (51) mit der Bezeichnung erste Speichermittel (MEM1) zum Speichern der Bilddaten des von einer das besagte Bild abtastenden Geraden ($\Delta$) besagten gelieferten Bildes, wobei die besagte Abtastgerade aus einem Satz angrenzender Pixel gebildet wird und das Objekt (OBJ) des Bildes in einen Abschnitt (I) teilt;
   Rechenmittel (61) mit der Bezeichnung erste Rechenmittel (CMP1) zum Berechnen der kumulierten Summen

($\Sigma$) der Intensitäten und der Intensitäten im Quadrat der angrenzenden Pixel über alle Intervalle der besagten Abtastgeraden ($\Delta$,) wobei diese Intervalle einerseits von einem ersten, mit Ausgangspixel (y1) bezeichneten Pixel, und andererseits von respektive jedem der Pixel des besagten Pixelsatzes, als Randpixel bezeichnet, begrenzt wird;

Speichermittel (52) mit der Bezeichnung zweite Speichermittel (MEM2) zum Speichern der aus den ersten Rechenmitteln (61) kommenden Daten;

Rechenmittel (63) mit der Bezeichnung dritte Rechenmittel (CMP3) zur Konstruktion über den besagten Pixelsatz der Abtastgeraden ($\Delta$) einer Funktion der besagten kumulierten Summen mit der Bezeichnung zweite Funktion [E(yi), V(yi)], wobei die besagte Konstruktion die Formulierung mittels der besagten gespeicherten kumulierten Summen der quadratischen Fehlerfunktion zwischen einer Funktion [g(y)] der reellen Intensität der Pixel über den Pixelsatz der Abtastgeraden und eine Funktion [M(y)] der Intensität eines binären Modells beinhaltet, die dem Profil der Funktion der reellen Intensität [g(y)] so nahe wie möglich kommt; und zur Vornahme der Bewertung eines optimalen Werts [E(yo), V(yo)] der besagten zweiten Funktion, konstruiert relativ zum besagten Pixelsatz der Geraden;;

Speichermittel (54) mit der Bezeichnung vierte Speichermittel (MEM4) zum Speichern eines Wertes der Abszisse (yo) eines Pixels der Abtastgeraden ($\Delta$) und eines Wertes [a(yo)] eines Parameters (a) mit der Bezeichnung Parameter der halben Breite, um die Abszisse der Mitte (yo) und die halbe Breite [a(yo)] des besagten Abschnitts (I) zu bilden, bestimmt durch die Gerade ($\Delta$), die das Objekt (OBJ) des Bildes teilt, wie respektive die Werte, die den besagten optimalen Wert [E(yo), V(yo)] der besagten zweiten Funktion der kumulierten Summen, von den dritten Rechenmitteln konstruiert, liefern;

Anzeigemittel besagten zur Bildanzeige, wobei diese Mittel eine zweidimensionale Pixelmatrix haben.

**13.** Vorrichtung nach Anspruch 12, die zudem enthält:

Speichermittel (53) mit der Bezeichnung dritte Speichermittel (MEM3) zum Speichern eines Parameters (a) mit der Bezeichnung Parameter halber Breite, wobei dieser besagte Parameter nach der Anzahl variabler Pixel zwischen den beiden Grenzen (a1,am) bewertet wird;

Rechenmittel (62) mit der Bezeichnung zweite Rechenmittel (CMP2) zur Vornahme der Verarbeitung jedes Pixels mit der Bezeichnung laufendes Pixel (Pi), definiert nach seiner Abszisse (yi) auf der Abtastgeraden ($\Delta$), wobei diese zweiten Rechenmittel (62) beinhalten:

* Mittel zur Bestimmung einer Funktion [E(a,yi), V(a,yi)] mit der Bezeichnung erste Funktion der besagten gespeicherten kumulierten Summen ($\Sigma$) relativ zu den Intervallen auf der Abtastgeraden ($\Delta$), wobei die Randpixel eine über die Abszisse (yi) des laufenden Pixels und den Parameter der halben Breite (a) definierte Abszisse haben,
* Mittel zur Bewertung eines besonderen optimalen Werts [E(yi), V(yi)] der besagten ersten Funktion relativ zum laufenden Pixel (Pi) innerhalb der Grenzen (a1,am) des besagten Parameters der halben Breite,

wobei diese zweite Funktion der kumulierten Summen daraufhin unter Verwendung dieser besonderen optimalen Werte [E(yi), V(yi)], kommend aus den besagten zweiten Rechenmitteln (62) und relativ zu allen Pixeln des Pixelsatzes der Abtastgeraden ($\Delta$), konstruiert wird.

FIG.1A

FIG.1B

27

FIG.1C

FIG.2A

FIG.2B

FIG.2C

FIG.3A

FIG.3B

FIG.3C

FIG.3D

FIG.4A

FIG.4B

FIG.5A

FIG.5B

FIG.6A

FIG.6B

FIG.6C